# EUROPÄISCHE PATENTSCHRIFT

(11) **EP 0 464 042 B1**
(45) Veröffentlichungstag und Bekanntmachung des Hinweises auf die Patenterteilung: **09.06.1993**
(21) Anmeldenummer: 90904249.1
(22) Anmeldetag: 21.03.1990
(51) Int. Cl.: B64C 15/02

(54) **SCHUBDÜSE ZUR SCHUBVEKTORSTEUERUNG FÜR MIT STRAHLTRIEBWERKEN AUSGERÜSTETE FLUGGERÄTE**
THRUST NOZZLE FOR THRUST VECTOR CONTROL IN AIRCRAFT FITTED WITH JET ENGINES
TUYERE DE POUSSEE DE COMMANDE DU VECTEUR DE POUSSEE D'AVIONS MUNIS DE MOTEURS A REACTION

(30) Priorität: 22.03.1989 DE 3909347
(43) Veröffentlichungstag der Anmeldung: 08.01.1992
(73) Patentinhaber: MTU MOTOREN- UND TURBINEN-UNION MÜNCHEN GMBH, D-80976 München (DE)
(72) Erfinder: ENDERLE, Heinrich, D-8038 Gröbenzell (DE); RÜD, Klaus, D-8038 Gröbenzell (DE); GEIDEL, Helmut-Arnd, D-8047 Karlsfeld (DE)
(86) Internationale Anmeldenummer: DE9000226
(87) Internationale Veröffentlichungsnummer: WO9011222

(56) Entgegenhaltungen:
- US-A- 3 581 995
- US-A- 3 640 469
- US-A- 4 763 840

## Beschreibung

Die Erfindung bezieht sich auf eine Schubdüse nach dem Oberbegriff des Patentanspruchs 1.

Unter dem Namen "Stealth-Bomber B-2" ist z.B. aus der DE-Z "Flug Revue", Nr. 1, Januar 1988, ein Flugzeug bekannt, das bezüglich Radar- und Infrarotaufspürung weitestgehend unempfindlich sein soll. Das Flugzeug besteht zum überwiegenden Teil aus einer verhältnismäßig weit ausladenden Tragflügeleinheit mit darin integrierten Rumpf- sowie Nutzlastaufnahmestrukturen. Mittels tragflächenoberseitig herausragender tunnelartiger Lufteinläufe sollen dazu räumlich nach innen und unten eingezogen in der Tragflügeleinheit angeordnete Gebläsestrahltriebwerke mit Luft versorgt werden. Mit anderen Worten handelt es sich im bekannten Fall um ein Unterschallflugzeugkonzept auch aus dem Grunde, um aus dem Schubstrahl resultierende Wärmeemissionen in Grenzen zu halten, indem der Schubstrahl eine Mischung aus heißem Kernstrahl, verhältnismäßig hohen Anteilen an Gebläseluft nebst zusätzlich abgesaugter Grenzschichtluft ist; dies im Gegensatz zu verhältnismäßig leicht u.a. mittels Infrarotsensoren aufspürbaren üblichen, für den Überschallflug ausgelegten, als Kampfflugzeuge bzw. als Waffenträger ausgebildeten Fluggeräten, bei denen vielfach Gasturbinenstrahltriebwerke mit verhältnismäßig niedrigem Nebenstromverhältnis in der Kombination mit einer z.B. für den Überschallflugbetrieb einschaltbaren Nachverbrennung (Nachbrenner) eingesetzt werden.

Aus der DE-PS 11 44 117 ist eine insbesondere für Senkrechtstart-Flugzeuge einsetztbare Strahlablenkvorrichtung bekannt, die aus teleskopartig verschwenkbaren Rohrbogensegmenten besteht in der Kombination mit einem in dem am weitesten nach außen ausfahrbaren Rohrbogensegment befindlichen zusätzlichen Strahlrichtgitter, das aus gleichzeitig um jeweils mittlere Achsen schwenkbaren Drehschaufeln besteht. Die im Wege einer derartigen Strahlrichtgitterausbildung und - anordnung einhergehende restliche Strahlablenkung ist mit einem noch immer beachtlichen Drosseleffekt sowie Umlenkverlusten des Abgasstrahls mit dementsprechenden Rückwirkungen auf das Triebwerk verknüpft. Die teleskopartige Verfahrbarkeit der Rohrbogensegmente ist vergleichsweise kompliziert und nicht frei von Störanfälligkeiten (thermisch bedingter Rohrverzug); auch dürfte im bekannten Fall ein zeitlich relativ langsames Ansprechverhalten für eine Schubvektorsteuerung zu erwarten sein.

Aus dem DE-GM 70 08426 ist eine Schubstrahlanlenkvorrichtung bekannt, bei der im Sinne eines Ablenkgitters angeordnete Ablenkschaufeln jeweils aus einem festen Eintrittsabschnitt und fortlaufend daran gleichzeitig verschwenkbaren Einzelabschnitten bestehen sollen, um so den Nachteil des schon behandelten Drosseleffektes auf das Triebwerk beseitigen zu wollen. Voraussetzung für die Durchführbarkeit des bekannten Falles ist es, daß betreffende mehrgliedrige Ablenkschaufeln mit ihren jeweils ersten Drehachsen im Bereich einer schräg geschnittenen Austrittsebene eines Gehäusewandendes angeordnet sind. In Bezug auf eine axsymmetrische Anströmung ist im bekannten Fall keine beidseitig dazu in einer Ebene, d.h., nach der einen und zu dieser entgegengesetzten Richtung erfolgende Strahlablenkung bzw. Schubvektorsteuerung möglich. Zwischen den Ablenkschaufeln wird insgesamt in der Austrittsebene kein stets die Strömung beschleunigender, konstanter Austritts- oder Engstquerschnitt im Sinne einer "konvergenten Düse" bereitgestellt; der Verstellaufwand und der Störanfälligkeitsgrad hinsichtlich Getrieben zwischen den einzelnen Schaufelsegmenten ist verhältnismäßig groß. Eine Schubdüse nach der eingangs genannten Art (Oberbegriff des Patentanspruchs 1) ist aus der US-A-3,640,469 bekannt. Dieser bekannte Fall setzt das Vorhandensein von drei, in der die drehachsen enthaltenden Ebene mit gleichem gegenseitigen Abstand angeordnete Klappen voraus; dabei sollen die drei Klappen über eine vergleichsweise komplizierte, teils getriebeartig wirkende mehrfache Hebel- und Lenkeranordnung betätigt werden; dabei ist jede äußere Klappe mit einem sich in Klappenlängsrichtung erstreckenden eigenen Betätigungshebel drehfest verbunden; am jeweils hinteren Ende sind die Betätigungshebel mit den einen Enden von Lenkern gekoppelt; diese Lenker sind am ürigen Ende mit einem um einen stromabwärtigen Gehäusepunkt schwenkbaren Kulissenhebel in einem stromaufwärtigen Punkt schwenkbar gekoppelt; an einem vom Kulissenhebel seitlich auskragenden und mit diesem fest verbunden Arm soll das eine Ende eines weiteren Schwenkarms angelenkt sein, der mit seinem übrigen Ende an das stromabwärtige Ende eines weiteren Betätigungshebels angekoppelt ist; dieser Betätigungshebel ist am übrigen Ende drehachsseitig drehfest mit der mittleren Klappe der Schubdüse gekoppelt. Die Verstellkraft soll im bekannten Fall etwa parallel zur Düsenachse in den seitlich auskragenden Arm eines einer äußeren Düsenklappe zugehörigen Betätigungshebels (Doppelarmhebel) eingeleitet werden. Es erfolgt also im bekannten Fall bei gleichzeitiger Verstellung sämtlicher Klappen eine Verdrehung des Kulissenhebels, die in eine mittlere Differenzwinkelverstellung der mittleren Klappe gegenüber den äußeren Klappen umgesetzt wird. Im bekannten Fall ist es praktisch nicht möglich, entweder nur zwei (äußere) Klappen oder mehr als drei Klappen schaufelgitterartig jeweils um unterschiedliche Verdrehwinkel steuern zu können. Insbesondere im zuletzt genannten Fall ist es nämlich erforderlich, örtlich größere oder geringere Schubstrahlablenkungen zwischen zwei benachbarten Klappen einstellen zu können; im Interesse örtlich verminderter Umlenkverluste (örtlich relativ schroffe Umlenkung über zwei Klappen des Gitters) ist es also erforderlich, dementsprechend größer bemessene örtliche Düsenflächenquerschnitte bereitzustellen und gleichzeitig wiederum die notwendigen Düsenkonvergenz zwischen zwei Klappen aufrecht zu erhalten. Hierzu vermittelt der bekannte Fall keinerlei greifbaren Lösungsansatzpunkt, denn er zielt ausschließlich auf eine konstantflächige konvergente Düsenausbildung über den gesamten Umlenkbereich bei Schubvektorsteuerung ab. Im übrigen ergeben sich im bekannten Fall im Wege der oben näher beschriebenen getriebeartigen Verstell-Hebel-Konfiguration (unterschiedliche Längen des weiteren Schwenkarmes und des weiteren Betätigungshebels: hier mittlere Klappe) bei gleichzeitiger Klappenverstellung unterschiedlich große Ablenkwinkel der mittleren Klappe bei deren Verschwenkung nach der einen oder anderen Seite sowie realativ zu den jeweiligen Stellungen der beiden äußeren Klappen, so, daß die im bekannten angestrebten Gesetzmäßigkeiten (Austrittsflächenkonstanthaltung) gar nicht praktisch realisierbar ist. Mit anderen Worten ist im bekannten Fall der individuelle Freiheitsgrad für eine örtlich unterschiedliche Klappenverschwenkung äußerst gering zu veranschlagen; letzteres insbesondere, wenn es um die Schubvektorsteuerung der Luft-Abgasströme mehrerer Triebwerke mittels eines gitterartigen Düsensystems geht. Ferner dürften im bekannten Fall, im Hinblick auf die Klappenverstellung, verhältnismäßig große auf das Verstellsystem einwirkende Belastungsmomente zu erwarten sein. Außerdem dürfte der bekannte Fall nur mit verhältnismäßig dickwandigen und gewichtlich schweren Klappen realisierbar sein, die eine von der jeweiligen Zapfenlagerungen aus keilförmig sich verjüngende Formgebung aufweisen. Der gesamte Verstellmittelaufwand ist im bekannten Fall verhältnismäßig groß mit damit einhergehenden Gewichtszuwachs.

Die vorstehend behandelten bekannten Düsen- bzw. Strahlablenkkonzepte vermitteln keinerlei Hinweise auf eine Ausbildung und Anordnung im Hinblick auf eine reduzierte Radar- und/oder Infrarotaufspürung. Auch befassen sich diese bekannten Ablenkkonzepte nicht mit der Problematik, jeweils die Schubstrahlen zweier oder mehrerer Strahltriebwerke düsenartig und zwecks 2-dimensionaler Schubvektorsteuerung so zu verarbeiten, daß düsenseitig eine möglichst geringe Radar- und Infrarotaufspürungsgefahr vorliegt.

Der Erfindung liegt die Aufgabe zugrunde, eine insbesondere für einen eingangs genannten Fluggerätetyp geeignete Verstellschubdüse zu schaffen, die eine 2-dimensionale Schubvektorsteuerung bei raschest möglicher Klappenverstellung mit verhältnismäßig geringem Verstellmittelaufwand ermöglicht, ohne in variablen Stellungen unzulässige Umlenkverluste und Drosselungen eines oder mehrerer Abgasströme hervorzurufen.

Die gestellte Aufgabe ist durch Patentanspruch 1 erfindungsgemäß gelöst.

Die Erfindung ermöglicht die Schaffung eines in sämtlichen Klappenstellungen konvergenten Düsenkonzeptes, mit dem von einem oder mehreren Triebwerken geförderte Abgas-Gebläseluftstrahlgemische, insbesondere zwecks variabler Seitensteuerung eines Flugzeugs, mit extrem geringen aerodynamischen Verlusten durchgesetzt werden können. Im Bereich des Rumpf- und/oder Tragflügelendes, insbesondere bei einem Fluggerät der eingangs genannten Art, kann die Schubdüse extrem flach bauend (geringe Einbauhöhe) und, im Wege vergleichsweise geringer Klappenlängen, vergleichsweise kurz ausgeführt werden, was sich wiederum zu Gunsten eines vergleichsweise geringen Eigengewichts der Düse auswirkt.

Bei der vorliegenden Schubdüse ist es also gewährleistet, daß der jeweils zwischen zwei Klappenenden bedarfsgerecht einstellbare geometrisch engste Querschnitt am Düsenende liegt und - unter Vermeidung von Umlenkverlusten - keine durchsatzverändernden Rückwirkungen auf die Düseninnenströmung entstehen, die wiederum den Triebwerksbetrieb gefährden könnten. Bereits mit nur zwei Klappen ist es entweder möglich, eine stets konvergente Düse mit stets konstantem engsten Querschnitt oder eine stets konvergente Düse mit als Funktion eines zunehmenden Strahlablenkwinkels sich vergrößerndem Düsenflächen-Querschnitt, bzw. engsten Querschnitt, bereitzustellen.

Gemäß der Erfindung kann vorteilhafterweise eine schaufelgitterartige Mehrfach-Klappendüse geschaffen werden, bei der eine mittlere oder zentrale Düsenklappe den verlangten bzw. nominalen oder maximalen Strahlablenkwinkel definiert. Im Hinblick auf Nachexpansionen der durchgesetzten Gasströme hinter dem jeweils engsten Düsenquerschnitt kann eine hieraus gegebenenfalls resultierende geringfügige Verringerung der verlangten Strahlumlenkung durch stärkere Winkelanstellung äußerer Klappen relativ zur Stellung der betreffenden mittleren Düsenklappe ausgeglichen werden.

Die insbesondere in der Verwendung mehrerer Düsenklappen schaufelgitterartige extrem flache Gestaltbarkeit der Schubdüse (flacher, langezogener Rechteckquerschnitt) verringert eine Aufspürgefahr bezüglich Infrarotsensoren, insbesondere in der Kombination mit einem -erfindungsgemäß- nach hinten und unten geneigten Düsenaustritt bzw. betreffend geneigter Einbaulage des bzw. der Triebwerke im bzw. am Fluggerät.

Die erfindungsgemäße Schubdüse kann auch zur Strahlablenkung bzw. Schubstrahlverschwenkung in einer vertikalen oder lotrechten Ebene z.B. bei zwei übereinander angeordneten Strahltriebwerken eingesetzt werden.

Vorteilhafte Ausgestaltungen der Erfindung nach Anspruch 1 ergeben sich aus den Merkmalen der Patentansprüche 2 bis 16.

Anhand der Zeichnungen ist die Erfindung beispielsweise weiter erläutert; es zeigen:

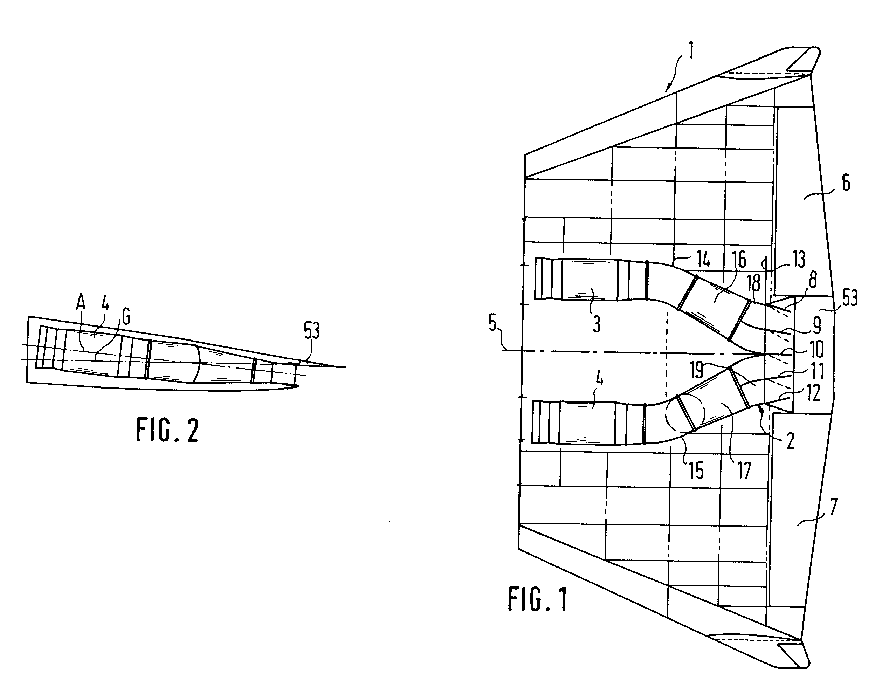

- Fig. 1: die Draufsicht einer frontal abgeschnittenen kombinierten Tragflächen-Rumpfanlage mit zwei axialsymmetrisch zellenseitig darin integrierten, parallel nebeneinander angeordneten, hier durch ausgezogene Linien besser verdeutlichten Gasturbinenstrahltriebwerken nebst geeigneten rohrartigen Abgasführungen zu einer erfindungsgemäßen, für den Durchsatz und die Ablenkung beider Massenströme ausgebildeten Schubdüse, die oben offen bzw. unabgedeckt aufgezeichnet ist,
- Fig. 2: die Seitenansicht des zellenseitig integrierten linken Strahltriebwerks aus Fig. 1 nebst Abschnitten der Schubdüse in Verbindung mit einer in den gemeinsamen düsenaustrittsseitig entweichenden Gasmassenstrom verfahrbaren Klappe,

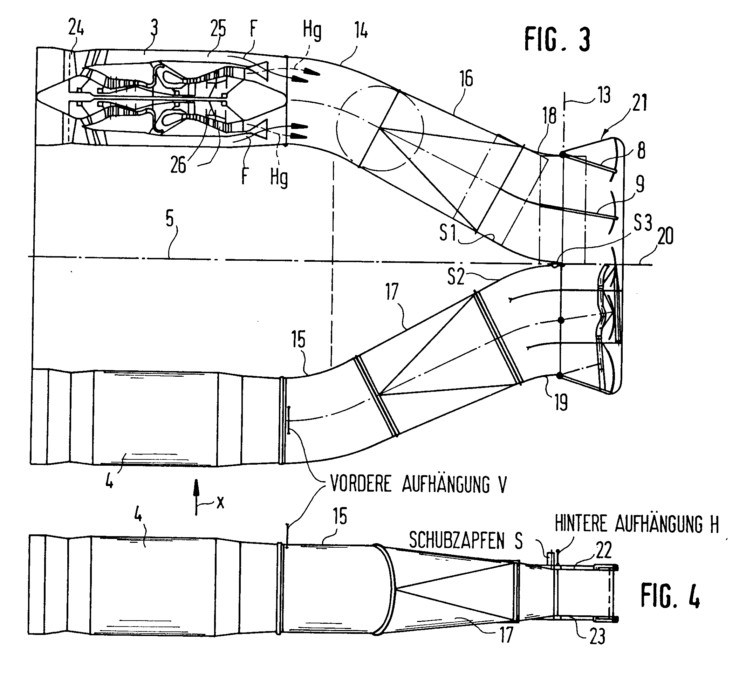

- Fig. 3: die Draufsicht des Gesamtantriebs nach Fig. 1 nebst den beiden Strahltriebwerken und Rohrführungen zur Schubdüse in gegenüber Fig. 1 vergrößertem Maßstab sowie mit in Querrichtung längs aufgeschnittener schematischer Ansicht des betreffenden aus Fig. 1 rechten Triebwerks,

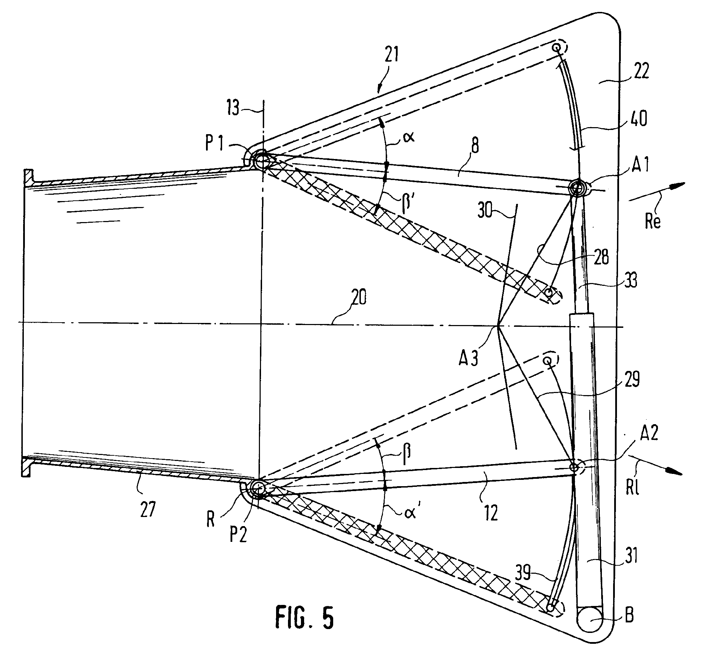

- Fig. 4: eine gemäß Blickrichtung X der Fig. 3 gesehene seitliche Ansicht des Antriebs unter Verdeutlichung von Aufhängungsdetails (vorn und hinten),
- Fig. 5: eine schematische Grundausführung der Schubdüse, in der Zuordnung zu einem einzigen Strahltriebwerk zu verstehen, mit zwei stets unter Konstanthaltung des engsten Düsenendquerschnitts um unterschiedliche Verdrehwinkel verschwenkbaren Klappen zwecks beidseitig horizontaler Strahlverschwenkung unter Einschluß variabler betreffender Klappenstellungen hierzu in Kombination mit zugehörigen Antriebs-Verstell- und Führungsmitteln (-Bahnen), und zwar als Draufsicht und teilweise (Rohrzulauf) geschnitten dargestellt,

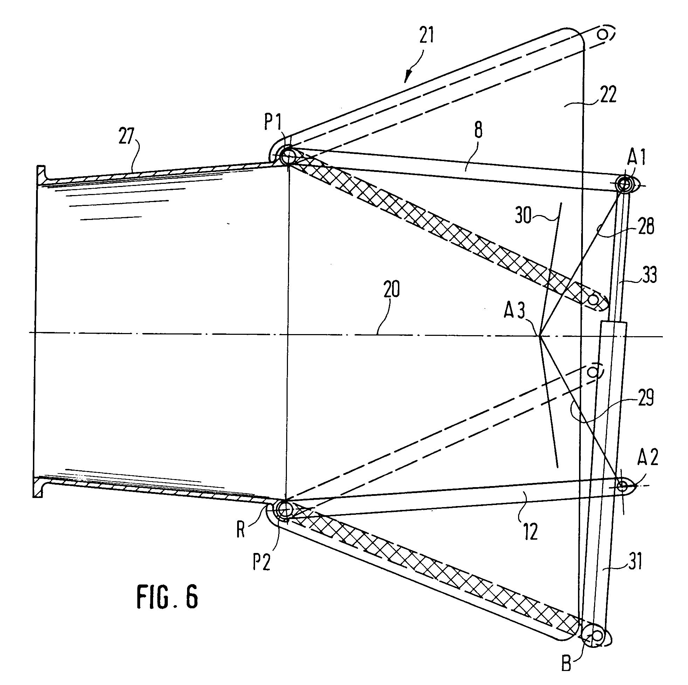

- Fig. 6: eine im Sinne der Fig. 5 dargestellte weitere Grundausführung der Schubdüse, von Fig. 5 lediglich dadurch abweichend, daß bei axial verkürztem Düsengehäuse und beibehaltener Klappenlänge, die Klappen stets endseitig aus dem Gehäuse herausragen mit entsprechender Anordnung der Antriebssysteme und Teilen der Verstellkinematik (Gelenkhebel) stromab des Gehäuseendes,

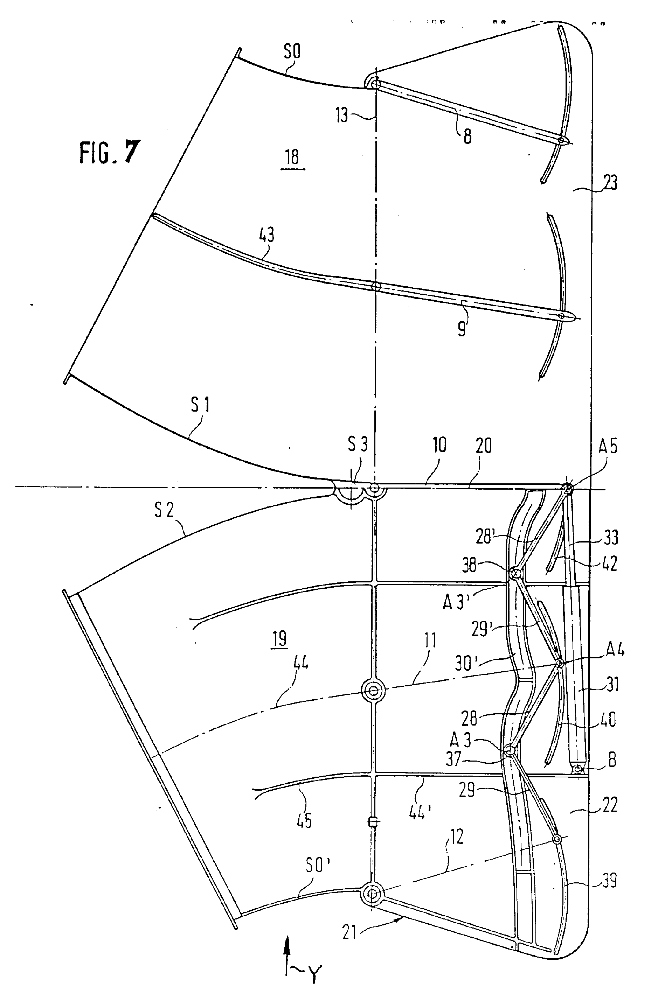

- Fig.7: eine vergrößerte Abbildung der Doppeldüsenkonfiguration gemäß Fig. 3 bezüglich der einen Hälfte als Draufsicht und bezüglich der anderen Hälfte oben abgedeckt und Innnenstrukturen (Klappen, aerodynamische Strömungsteilerwände) freilegend dargestellt, und worin bezüglich der einen Hälfte (Draufsicht) oben außen u.a. am Düsengehäuse befindliche Antriebsmittel, die ziehharmonikaartige Verstellhebelkinematik nebst einer damit zusammenwirkenden Führungsbahn verdeutlicht sind,

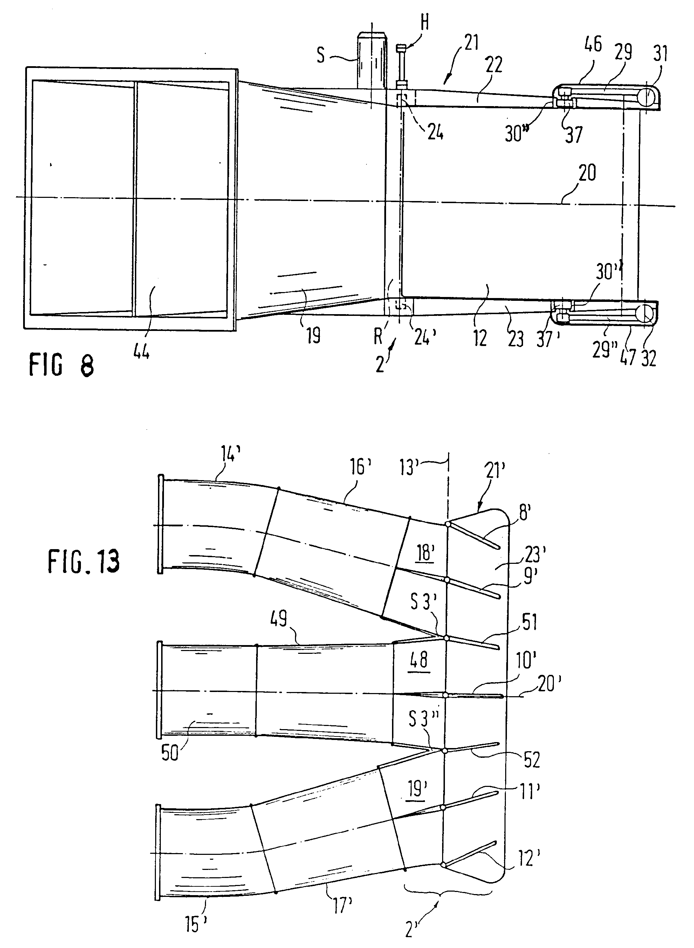

- Fig.8: die in Blickrichtung Y gesehene seitliche Ansicht der Doppeldüsenkonfiguration nach Fig. 7 der Erfindung, woraus u.a. der seitlich sowie hinten offene Teilabschnitt des Düsengehäuses nebst einer seitlich außen befindlichen Düsenklappe sowie gehäuseartig eingefaßt, jeweils oben und unten außen an den betreffenden Düsengehäusewandungen befindliche Antriebssysteme nebst Abschnitten des Verstell- und Führungssystems verdeutlicht sind,

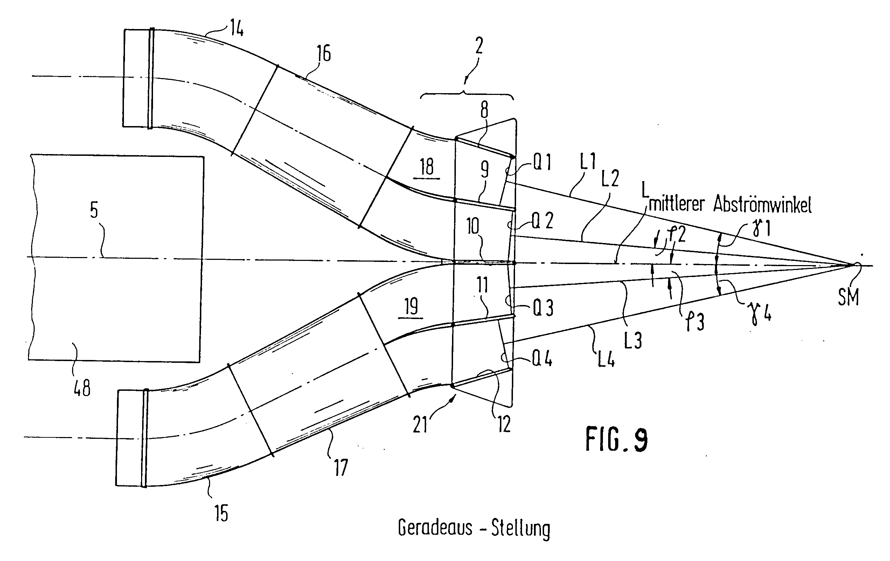

- Fig. 9: die im Hinblick auf ein Antriebssystem mit zwei parallel und mit Abstand zueinander angeordneten Triebwerken nach Fig. 1 vergrößert aufgezeichnete, für den Durchsatz beider Triebwerkgasmassenströme ausgebildete Schubdüse bzw. Doppeldüsenkonfiguration, unter Zuordnung der betreffenden Rohrzuleitungen, hier in einer ersten, für den Horizontal- oder Geradeausflug maßgeblichen Stellung der Düsenklappen,

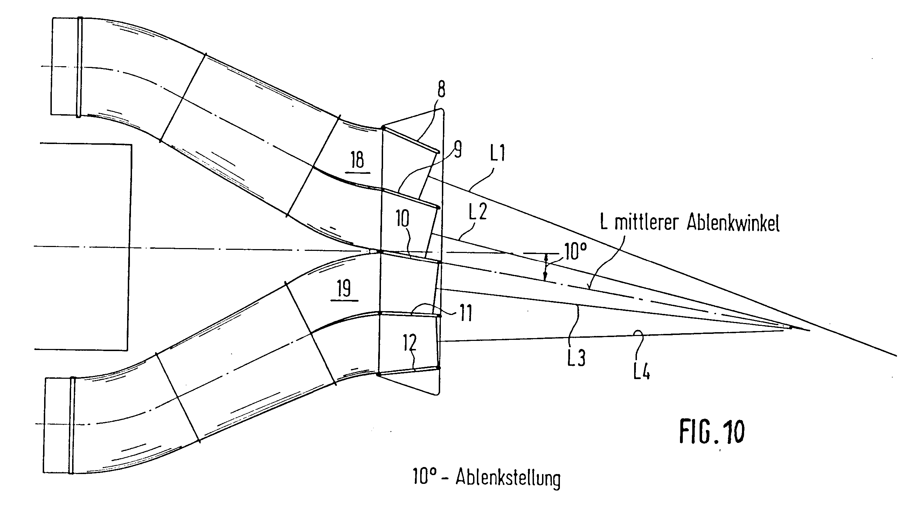

- Fig. 10: die Schubdüse bzw. Doppeldüsenkonfiguration nach Fig. 9, hier jedoch in einer zweiten Stellung sämtlicher Düsenklappen unter Ausbildung eines resultierenden bzw. mittleren Strahlablenkwinkels von 10° zur Längssymmetrieebene des Fluggerätes, unter Verdeutlichung der durch jeweils mittlere Stromlinien angegebenen unterschiedlich gerichteten Einzelstrahlverläufe aus jeweils zwei benachbarten Klappen, die dabei fortlaufend um unterschiedliche Winkel zur Ebene angestellt sind, in der sie schwenkbar gelagert sind,

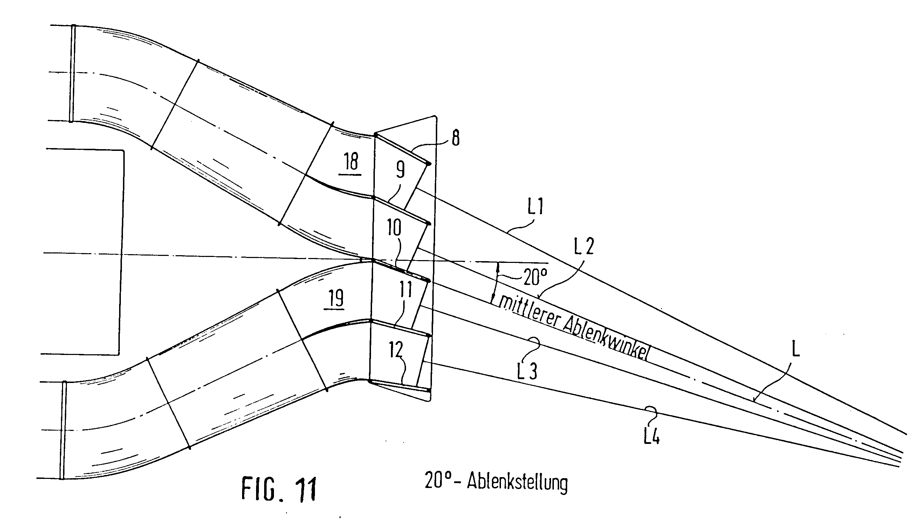

- Fig. 11: die Schubdüse bzw. Doppeldüsenkonfiguration nach Fig. 10, hier jedoch davon abweichend durch weitere mittlere bzw. resultierende Schubstrahlablenkung auf 20° mit entsprechend den Klappenanstellwinkeln ausgebildeten Symmetrielinienverläufen,

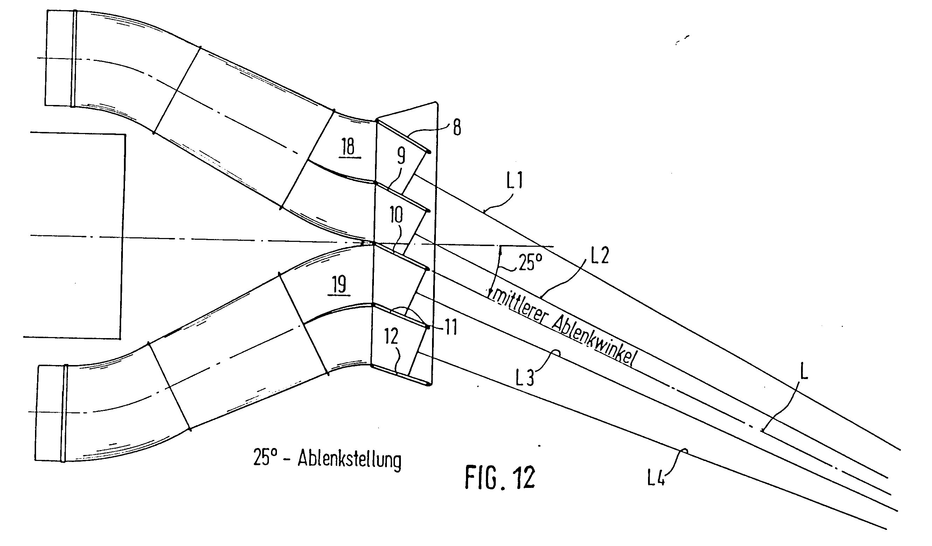

- Fig. 12: die Schubdüse bzw. Doppeldüsenkonfiguration nach Fig. 9, 10 und 11,hier von Fig. 11 abweichend durch Veranschaulichung des erreichten maximalen bzw. nominalen Schubstrahlablenkwinkels von 25° und
- Fig. 13: eine im Hinblick auf drei parallel mit Abstand angeordnete Strahltriebwerke ausgebildete Schubdüsenkonfiguration als Draufsicht sowie an der Oberseite nicht abgedeckt dargestellt, einschließlich zugehöriger Abgasrohrführungen zur Düse und worin die betreffenden Düsenklappenstellungen eine Horizontal- oder Geradeaus-Flugstellung der Schubdüse veranschaulichen.

In Fig. 1 verkörpert 1 die kombinierte Tragflügel-Rumpf-Struktur eines eingangs behandelten Fluggerätes, welches gegenüber feindlicher Radar- und Infrarotaufspürung weitestgehend unempfindlich sein soll. 2 verkörpert eine Variante einer erfindungsgemäßen Schubdüse, die hier im Hinblick auf eine Antriebsanordnung des Fluggerätes mit zwei parallel nebeneinander angeordneten Turbinenstrahltriebwerken 3,4 angeordnet und ausgebildet ist. Dabei ist die Schubdüse 2 symmetrisch zur Längssymmetrieebene 5 des Fluggerätes sowie austrittsseitig am Tragflügel-Rumpfende auslaufend angeordnet, hier z.B. zwischen zwei zusätzlichen Querrudern 6,7 des Fluggerätes. Die Schubdüse 2 ist im vorliegenden Fall schaufelgitterartig ausgeführt und besteht u.a. aus fortlaufend von der einen nach der anderen Seite hin mit 8,9,10,11 und 12 bezeichneten fünf Klappen, die mit gleichmäßigen Abständen zueinander in einer Ebene 13 schwenkbar gelagert sind, die hier unter einem rechten Winkel zur Längssymmetrieebene 5 angeordnet ist. Die Klappen 8 bis 12 sollen zwecks Schubvektorsteuerung gleichzeitig um unterschiedliche Verdrehwinkel schwenkbar angeordnet und betätigbar sein, derart, daß ein düsenaustrittsseitig ausgebildeter engster Querschnitt der Schubdüse stets konstant gehalten wird . Im vorliegenden Fall befindet sich die Schubdüse 2 in der Horizontal- bzw. Geradeausflugstellung (s.h. auch Fig 9 ). Weitere strahlablenkwinkelvariationen sind später in den Fig. 10,11 und 12 ausführlich behandelt und beschrieben.

Aus Fig. 2 geht deutlich die leicht von vorn oben nach hinten unten geneigte Triebwerks- und Schubdüseneinbaulage hervor, hier am aus Fig. 1 linken Strahltriebwerk 4 verdeutlicht, also im Wege der Neigung der Triebwerksachse A zur Fluggerätelängsachse G.

Aus Fig. 3 und 4 geht deutlicher als in Fig. 1 die triebwerksabgasstromseitige Rohrführungsgeometrie hervor, mit der die von beiden Strahltriebwerken 3,4 geförderten Massenströme aus Gebläseluft- und jeweiligen Heißgasrestströmen der betreffenden Schubdüse 2 zugeführt werden sollen, und zwar unter möglichst geringen Umlenkverlusten der Massenströme. Austrittsseitig sind dabei beiden Strahltriebwerken zwei Rohrkrümmer 14,15 nachgeschaltet, mit denen die Strömung jeweils hier um etwa 30° abgelenkt wird. An die Rohrkrümmmer 14,15 angeschlossene Rohrführungen 16,17 mit jeweils geraden Längsachsen laufen unter jeweils gleichen Neigungswinkeln symmetrisch gegen die Schubdüse 2 aus. Deutlich u.a. aus Fig. 4 erkennbar, gehen die Rohrführungen 16,17 von einem zunächst kreiszylindrischen Querschnitt in einen düsenanschlußseitig rechteckigen Querschnitt über. Mit ihren Austrittsenden sind die beiden Rohrführungen 16,17 an zwei im Querschnitt rechteckige rohrartige Zuläufe 18, 19 angeschlossen, die genüber den Rohrkrümmern 14,15 leicht entgegengesetzt gekrümmt sind. Wie ferner aus Fig. 3 erkennbar ist, sind die rohrartigen Zuläufe 18,19 im Wege ihrer unmittelbar benachbarten Seitenwände S1,S2 symmetrisch gehäuseartig zusammengeführt. An der Zusammenführungsstelle sowie etwa in der Ebene 13, in der die Klappen 8 bis 12 schwenkbar gelagert sind, schließt sich ein die Klappen enthaltender Gehäuseabschnitt 21 an; die jeweils rechteckigen Doppelrohrenden der beiden rohrartigen Zuläufe 18,19 können endanschlußseitig rahmenartig sowie als Träger der hier oberen und unteren einander gegenüberliegenden Wandungen 22,23 des Düsengehäusen ausgebildet sein (Fig.4 und 8); an sowie zwischen den beiden Wandungen 22,23 (hier rahmenseitig -R-Fig.8) sind die Klappen 8 bis 12 in der Ebene 13 schwenkbar gelagert, und zwar z.B. mittels Drehzapfen (s.h. hierzu Drehzapfen 24 der hier äußeren einen Klappe 12 -Fig.8).

Eine jeweils vordere gelenkhebelartige zellenseitige Aufhängung der genannten Antriebsanlage nach Fig. 1,3 und 4 ist mit V, eine gleiche oder vergleichbare hintere Aufhängung mit H (hier rahmenseitig an R-Fig.8) sowie ein Schubzapfen mit S bezeichnet.

Je nach der Anzahl der Triebwerke enthält die betreffende Schubdüse also mindestens einen rohrartigen Zulauf, der wiederum Bestandteil des Düsengehäuses ist; in Abwandlung von den Fig. 3,4,7 und 8 kann der bzw. können die rohrartigen Zuläufe auch quadratisch oder selbst als Übergangsrohre ausgebildet sein, die von einem anfangs z.B. noch kreisförmigen Querschnitt in einen z.B. rechteckigen Querschnitt übergehen, und zwar endseitig anschlußseitig an den betreffenden die Klappen enthaltenden Gehäuseabschnitt 21 der Schubdüse.

Je nach Anzahl und Abständen zwischen den Triebwerken könnten die rohrartigen Zuläufe, also auch diejenigen 18 bzw. 19 nach Fig. 1,3,4, 7 und 8 auch geradachsig sowie geradwandig ausgeführt sein; auf eine diesbezügliche Schubdüsenvariante mit z.B. drei nebeneinander angeordneten Strahltriebwerken wird zu Fig. 13 später im Detail noch näher eingegangen.

Die insbesondere aus Fig. 1,2 und 4 ersichtliche Ausführung und Anordnung des Antriebssystems des Fluggerätes ermöglicht in Anpassung an die hier mit verhältnismäßig großem seitlichen Abstand angeordneten Strahltriebwerke 3 und 4 sowie in Kombination mit dem Rohrzuleitungssystem (14,15,16,17) nebst düsengehäuseseitiger Zulaufausbildung (18,19) eine in Bezug auf das Fluggerät räumlich nach der Mitte sowie nach hinten und unten eingezogene Anordnung der Schubdüse 2. Insbesondere in Bezug auf Wärmeemissionen und damit verbundene Infrarotaufspürungsgefahr ergibt sich somit nicht nur bezüglich der Anordnung der Strahltriebwerke 3,4, sondern auch hinsichtlich der Schubdüsenausbildung selbst eine erkennungsunempfindliche Lösung; hier insbesondere auch bezüglich der Schubdüse 2 und deren oberer rückwärtiger oder schräg-rückwärtiger Einblickmöglichkeit. Mit zur Wärmeemissionsunempfindlichkeit der Schubdüse 2 wie, aber des gesamten Antriebssystems trägt bei, daß erfindungsgemäß Strahltriebwerke 3,4 als Gebläsetriebwerke mit verhältnismäßig großen Nebenstromverhältnissen vorgesehen sind; gemäß aufgeschnittenem Strahltriebwerk 3 handelt es sich z.B. um ein Zwei-Wellen-Zweistromtriebwerk, bei dem das Gebläse 24 als Frontgebläse in einen das Grundtriebwerk ummantelnden Sekundärluftkanal 25 fördert; d.h., der Hauptvortriebsschub wird vom Gebläse 24 bereitgestellt; die Schubdüse 2 wird also jeweils von einem Gasmassenstrom beaufschlagt, der überwiegend aus verhältnismäßig kalten Gebläseluftanteilen (Pfeile F) sowie aus der Niederdruckturbine 26 (=Antriebsturbine des Gebläses 24) abfließenden Heißgasanteilen (Pfeile Hg) des Grundtriebwerks nebst Gaserzeuger besteht. Wie am Strahltriebwerk 3 ferner verdeutlicht, ist ein aus umlaufenden taschenartigen Vertiefungen ausgebildeter Mischer M für die Gebläseluft- und Heißgasanteile F bzw. Hg vorgesehen, so daß bereits austrittsseitig an den Triebwerken 3,4 eine verhältnismäßig niedrige Abgastemperatur vorliegt, die sich bis zur Schubdüse 2 deutlich reduziert, und zwar auf Temperaturwerte von ca. 200°C. Somit kann die Schubdüse 2 gänzlich oder überwiegend in "Leicht-Bauweise", z.B. aus Aluminium oder einer Aluminiumlegierung, gefertigt werden. Das Temperaturniveau der jeweiligen Rohrzuleitungen zur Schubdüse 2 sowie auch der letztere selbst kann somit bezüglich Wärmeemissionen. (Infrarotaufspürgefahr) verhältnismäßig niedrig veranschlagt werden; ferner besteht erfindungsgemäß hierzu die Möglichkeit, das gesamte Antriebssystem, insbesondere die Rohrzuleitungen sowie die Schubdüse 2 selbst, kühlfilmartig zu umspülen, und zwar im Wege aus in Nachbarschaft der Triebwerkseinläufe angesaugter Luftgrenzschicht-Ströme.

Insbesondere aus Fig. 1, 3 und 7 geht ferner hervor, daß der Gehäuseabschnitt 21 der Schubdüse 2, in dem die Klappen 8 bis 12 zwischen den einander gegenüberliegenden Wandungen 22,23 verschwenkbar angeordnet sind, von der Eintritts- nach der Düsenaustrittsseite hin, in Anpassung an den maximalen äußeren Winkelausschlag einer jeweils äußeren Klappe 8 bzw. 12 räumlich erweitert ist; siehe hierzu auch Fig. 12, maximal möglicher Winkelausschlag der einen äußeren Klappe 12 bei resultierender maximaler Strahlablenkung von hier z.B. 25°. Diese örtliche Aufweitung des Gehäuseabschnitts 21 führt insoweit zu verhältnismäßig geringen aerodynamischen Verlusten gegenüber der Außenluftströmung, als davon grundsätzlich lediglich die betreffenden hier oberen und unteren Wandurigen 22 bzw. 23 (Fig.4 und 8) betroffen sind; dies also im Wege einer Schubdüsenkonfiguration, bei der der Gehäuseabschnitt 21 zwischen den Wandungen 22 bzw. 23 nicht nur an zwei in Bezug auf die Schwenkebene (z.B. hier horizontal) einander gegeüberliegenden Seiten, sondern auch zur Düsenaustrittsseite hin überwiegend offen, d.h., hier abschnittsweise lediglich durch die betreffenden äußeren Klappen 8 bzw. 12 heißgasseitig gegenüber der äußeren Umgebung abgesperrt ist. Die zuvor genannte Ausbildung könnte auch so umschrieben werden, daß an einem viereckigen, im wesentlichen rahmen artigen Endabschnitt R (Fig. 8) düsenachsparallel frei aus kragende Enden der einander gegenüberliegenden Wandurgen 22,23 angeordnet bzw. ausgebildet sind, zwischen denen die Klappen 8 bis 12 verschwenkbar sind.

Die zuvor genannten Erfindungsmerkmale schließen aber grundsätzlich nicht aus, das gesamte Düsengehäuse bzw. den gehäuseabschnitt 21 quadratisch bzw rechteckig in sich geschlossen ausbilden zu können.

Es können dabei eine jeweils äußere Klappe 8 bzw. 12 zugleich als Abdichtmittel der zwischen denselben geführten Heißgasströmung gegenüber der äußeren Umgebung ausgebildet sein.

Vorteilhaft können dabei die jeweils äußeren Klappen 8 bzw. 12 in Drehachsebene gegenüber angrenzenden Rohrwand- und/oder Leitwand enden sowie entlang der an die Wandungen 22,23 des Düsengehäuseabschnitts 21 angrenzenden Klappenränder mittels starrer, elastischer oder beweglicher Dichtungen abgedichtet angeordnet sein. Bevorzugt können dabei Bürstendichtungen eingesetzt werden. Der Einsatz von Dichtleistung aus Gummi oder dergleichen oder in Form von Teflonschnüren wäre ebenfalls denkbar.

Die zuvor erörterten Erfindungsmerkmale sind sinngemäß auch im Hinblick auf die nunmehr erörterten Schubdüsenvarianten nach den Fig. 5 bis 6 übertragbar bzw. bei letzteren ebenfalls sinngemäß anwendbar.

Das in Verbindung mit den Fig. 5 bis 6 erörterte Antriebs- und Verstellsystem ist wiederum auf das Ausführungsbeispiel insbesondere nach Fig. 7 sinngemäß übertragbar.

Gemäß den Fig. 5 bis 6 kann also die erfindungsgemäße Schubdüse auch in der Zuordnung zu einem einzelnen Strahl triebwerk zwecks variabler Schubvektorsteuerung eingesetzt bzw. vorteilhaft praktiziert werden. Hierzu besteht die Schubdüse z.B. aus einem rechteckförmigen Rohrzulauf 27, an dessen rahmehartiges Endteil R (s.h. auch z.B. Fig.8) sich hier ebenfalls die düsenachsparallel (Achse 20) auskragenden Abschnitte der sich einander gegenüberliegenden Wandungen 22,23 des Düsengehäuses anschließen sollen, wobei aus Fig. 5 bis 6 lediglich der hier obere, dem Gehäuseabschnitt 21 zugehörige eine Abschnitt der Wandung 22 ersichtlich ist. Im Rahmen dieser Grundausführungen der erfindungsgemäßen Schubdüse sind also in der betreffenden Ebene 13, deren Lage mit der anschlußseitigen Verbindungsebene, zwischen Zulauf 27 und Gehäuseabschnitt 21, zusammenfällt, lediglich zwei Klappen 8 bzw. 12 mit Abstand und um vertikale Drehachsen (Punkte P1 bzw. P2) gleichzeitig um unterschiedliche Verdrehwinkel schwenkbar angeordnet. Die zwei Klappen 8 bzw. 12 erfüllen zugleich die eingangs (s.h. z.B. Fig.1, 3 und 7) vermerkte Funktion der "äußeren Klappen" u.a. auch hinsichtlich ihrer Abdichtwirkung.

Wie ferner deutlich aus den Fig. 5, und 6 erkennbar, sind beide Klappen 8 bzw. 12 heißgas- sowie umgebungsluftseitig aerodynamisch günstig flächenbündig fluchtend mit ihren stromaufwärtigen Enden an kreiszylindrisch ausgesparten Flächen des rahmenartigen Endteils R der beiden Seitenwände des rohrartigen Zulaufs 27 angeordnet. Mit anderen Worten schließen sich die Klappen 8 bzw. 12 jeweils aerodynamisch flächenbündig fluchtend an die Enden der beiden einander gegenüberliegenden Seitenwandungen des Zulaufs 27 an.

Mit ausgezogenen Linien ist dabei jeweils die Geradeaus- oder Horizontalflugstellung der Klappen 8 bzw. 12 verdeutlicht (erste End- oder Grundstellung). Die gestrichelte gezeichnete Position beider Klappen 8 bzw. 12 verkörpert eine zweite gemeinsame Endstellung beider Klappen 8 bzw. 12 mit daraus resultierender maximaler Strahlablenkung (Pfeil Re) nach der einen Seite (hinten-rechts); eine gestrichelt und mit Überkreuz-Schraffur belegt gezeichnete dritte Endstellung beider Klappen 8 bzw. 12 verkörpert die daraus resultierende maximale Strahlablenkung (Pfeil .Rl) nach der anderen Seite (hinten-links). In allen beispielhaft genannten Endstellungen liegt ein konstant gehaltener engster Düsenquerschnitt zwischen den Klappen 8 und 12 bei stets konvergenter Düsenausbildung vor.

Auf Fig. 5 ist ferner deutlich erkennbar, daß für die zweite gemeinsame Endstellung der Klappen 8 bzw. 12 (Pfeil Re) die eine Klappe 8 aus der ursprünglichen Geradeausflugstellung gleichzeitig um einen größeren Klappenverdrehwinkel α verstellt werden muß als die andere Klappe 12 (Verdrehwinkel β), während für die dritte gemeinsame Endstellung (Pfeil Rl) genau umgekehrte Verhältnisse vorliegen, d.h., Klappe 12 muß um einen größeren Verdrehwinkel α' als Klappe 8 (Verdrehwinkel β') verstellt bzw. verschwenkt werden. Die zuvor zu Fig. 5 vermerkten und aufgezeichneten Gesichtspunkte gelten sinngemäß auch in Verbindung mit der Schubdüsenvariante nach Fig. 6.

Um die Klappen 8,12 (Fig.5) in der angegebenen Weise zwecks Strahlablenkung und Schubvektorsteuerung gleichzeitig um unterschiedliche Verdrehwinkel verschwenken zu können, sind schematisch durch entsprechende Linienzüge verkörperte hebelartige Verstellglieder 28,29 vorgesehen, die hier z.B. mit ihren einen Enden (Punkte A1,A2) an die stromabwärtigen Enden der Klappen 8,9 gelenkig angreifen; mit ihrem anderen beweglich aneinander gekoppelten Enden (Hebelgelenkpunkt A3) sind die hebelartigen Verstellglieder 28,29 in einer zugeordneten, hier ebenfalls nur durch einen Linienzug verkörperten Führungsbahn 30 verfahrbar, die in Abstimmung auf die geforderte Klappenverstellung - insbesondere gleichzeitige Verstellung um unterschiedliche Verdrehwinkel - gekrümmt ist. Die Führungsbahn 30 ist hier im wesentlichen quer zur Düsenachse 20 verlaufend angeordnet; insbesondere ist hierbei die Führungsbahn 30 beidseitig gleichförmig auf einen gemeinsamen Düsensymmetriepunkt hin ausgewölbt gekrümmt; dabei fällt dieser Düsensymmetriepunkt mit der Position des Hebelanlenkpunktes A3 zusammen, die dieser ein nimmt, wen sich die Schubdüse nebst Klappen 8,12 in der Geradeausflugstellung befindet, die zuvor auch als erste End- oder Grundstellung der Schubdüse definiert worden ist. In zu Fig. 5 nicht weiter dargestellter, jedoch in Fig.7 sinngemäß besser verdeutlichter Art und Weise können die hebelartigen Verstellglieder 28,29 am bzw. in Höhe des gemeinsamen Anlenk- bzw. Gelenkpunktes A 3 mittels einer Rolle oder dergleichen in der hierzu kulissenartig auszubildenden Führungsbahn 30 verfahrbar bzw. zwangsgeführt sein.

Als Antriebssysteme für die Klappenverstellung können hydraulisch oder pneumatisch betätigte Verstellzylinder 31 (Fig.5) bzw. 31,32 (Fig.8) vorgesehen sein; es ist aber durchaus auch der Einsatz anderweitiger, z.B. motorisch angetriebener Betätigungseinrichtungen, wie Kugelrollspindeln, möglich. Gemäß Fig. 5 ist also ein am stromabwärtigen Ende des Düsengehäuses, hier also ein im Punkte B seitlich außen beweglich an der oberen Wand 22 befestigter Verstellzylinder 31 aufgezeigt, der mit seinem zug- druckstangenartigen Verstellglied 33 in Höhe des einen klappenendseitigen Hebelanlenkpunktes Al beweglich an die eine Klappe 8 angekoppelt ist. Bei Verstellung der einen Klappe 8 wird also die andere Klappe 12 über das beschriebene Verstellhebelsystem 28,29 nebst Führungsbahn 30 gleichzeitig mitverschwenkt unter Einhaltung der Gesetzmäßigkeit unterschiedlicher Klappenverdreh- oder Schwenkwinkel im Wege der daraus variablen Schubvektorsteuerungsmöglichkeiten.

Vorteilhaft ist es, daß die mit den Klappen 8 bzw. 12 zusammenwirkenden hebelartigen Verstellglieder 28,29, Führungsbahnen gegebenenfalls einschließlich der Verstellzylinder 31 (Fig.5) bzw. 31,32 (Fig.8) außerhalb der Düsenheibgasströmung und damit von dieser unbeeinträchtigt bzw. ohne aerodynamische Beeinträchtigung der Heißgasströmung angeordnet sind.

Abweichend von Ausführungsbeispiel z. B. nach Fig. 5 wäre es durchaus im Rahmen der Erfindung u.a im Hinblick auf vorliegende Ein- und Anbauverhältnisse möglich, die Antriebseinrichtungen für die Klappenverstellung, also den Verstellzylinder 31 so anzuordnen, daß das äußere Ende des zugehörigen Verstellglieds 33 im Punkte A 3 bzw. in Höhe dieses Punktes A3 (Hebelgelenk- bzw. -anlenkpunkt) angreift.

Im Rahmen der Erfindung besteht, z.B. abweichend von Fig. 5, die Möglichkeit, daß, insbesondere im Hinblick auf eine Ausbildung der Antriebssysteme als Verstellzylinder 31, dieselben entweder, gemäß Fig.5, stromab oder aber auch stromaufwärtig der betreffenden Führungsbahn 30 angeordnet werden könnten, hier also z.B. für den Fall, wenn das betreffende Verstellglied 33 endseitig etwa im mittleren Bereich an eine Klappe, z.B. 8, angekoppelt werden sollte.

Vorteilhaft ist es gemäß der Erfindung ferner vorgesehen, die Verstellzylinder 31 (Fig.5) bzw. 31,32 (Fig.8) um 180° zueinander winkelversetzt seitlich außen an der oberen und unteren Wand 23 bzw. 24 des betreffenden Gehäuseabschnitts 21 anzuordnen. Dabei würde also der aus Fig. 5 nicht ersichtliche zweite bzw. untere Verstellzylinder 32 mit seinem zugdruckstangenartigen Verstellglied endseitig an die andere Klappe 12 gelenkig angreifen unter Zuordnung relevanter unterer Hebelverstellkinematik nebst Führungsbahn. Diese Anordnung ermöglicht eine gleichförmige Gewichtsverteilung und wirkt sich ferner hinsichtlich einer gleichförmigen Verstellkrafteinleitung vorteilhaft aus. Auch bei Ausfall eines Verstellzylinders, z.B. 31, wäre die Klappen verstellung über den anderen Verstellzylinder, z.B. 32, noch gewährleistet.

Fig. 6 verkörpert eine weitere Abwandlung zu Fig. 5 grundsätzlich lediglich dadurch, daß eine bezüglich des Gehäuseabschnitts 21 in der Baulänge axial verkürzte Schubdüse vorliegt unter Beibehaltung der Klappenlänge gemäß Fig.5. Stromab der Düsengehäuseöffnung bzw des Endes der hier oberen Wand 22 ist daran der Verstellzylinder 31 nebst zugdruckstangenartigem Verstellglied 33 angeordnet, das endseitig an die eine (8) der beiden aus der Gehäuseöffnung herausragenden beiden Klappen 8 bzw. 12 gelenkig angekoppelt ist. Gemäß Fig. 6 ergibt sich also gegenüber Fig. 5 eine weiter in Richtung auf den Düsenaustritt nach hinten verschobene Lage der Führungsbahn 30, und der hebelartigen Verstellglieder 28,29, die somit gehäuseseitig teilweise frei nach hinten überhängen. Ansonsten ist die Wirkungsweise des Schubdüsenkonzepts nach Fig. 6 praktisch mit demjenigen nach Fig. 5 identisch. Einbaulängenverringerung, Gewichtsverminderung sowie eine Ausbildung ohne Führungsschlitze und sind weitere Vorteile der Schubdüsenausbildung aus Fig. 6 gegenüber Fig. 5.

Wie im übrigen eingangs sinngemäß in Verbindung mit Fig. 1,3,4 sowie 7 und 8 behandelt, sollen auch die Schubdüsenkonfigurationen nach Fig. 5 und 6 so ausgebildet sein, daß die einander gegenüberliegenden, hier also oberen und unteren Wandungen 22 bzw. 23 des Gehäuseabschnitts 21, in dem die Klappen 8,12 gänzlich oder überwiegend verschwenkbar angeordnet sind, in Anpassung an den mit dem maximalen Winkelausschlag (siehe α, α' -Fig.5) der einen (8) oder anderen Klappe 12 sich ergebenden Klappenneigungsverlauf räumlich erweitert sind, und zwar von der Eintrittsseite in Richtung auf die Austrittsseite des Gehäuseabschnittes 21.

Im Hinblick auf die eingangs schon erörterte Schubdüse 2 in schaufelgitterartiger Mehrfach-Klappenanordnung veranschaulicht Fig. 7 deutliche Einzeldetails auch hinsichtlich der Verstellkinematik und der hierzu besonderen Führungsbahnausbildung. Insbesondere in Abwandlung der "Grundausführung" nach Fig. 5 sieht Fig. 7 vor, daß die hebelartigen Verstellglieder - in Reihenfolge, von der einen nach der anderen Seite der Schubdüse gesehen - mit 29,28,29' und 28' bezeichnet, ziehharmonikaartig gelenkig aneinander gekoppelt sind Bezüglich der einen gemeinsamen Hebelanlenk- bzw. -gelenkpunkte A3, A3' greifen also die betreffenden hebelartigen Verstellglieder 29,28 bzw. 29',28' also als ziehharmonikaartiger-Hebelverbund mittels in Höhe der Punkte A3,A3' angeordneter Rollen 37,38 in zugeordnete Abschnitte einer Führungsbahn 30' ein, die im Hinblick auf die jeweils gleichzeitig unterschiedlich zu erzielenden Klappenverdrehwinkel hin abwechselnd geradlinig sowie fortlaufend mal nach der einen oder anderen Seite hin unterschiedlich gewölbt verläuft . Mit ihren anderen oder übrigen Enden sind z.B. die hebelartigen Verstellglieder 28,29' ebenfalls an gemeinsamen Anlenk- bzw Gelenkpunkten A 4 beweglich aneinander gekoppelt. In Höhe des Gelenkpunktes A4 ist das stromabwärtige Ende der Klappe 11 über einen Zapfen mitnahmebeweglich angelenkt; an das übrige oder andere Ende des hebelartigen Verstellglieds 28' greift das stromabwärtige Ende der hier mittleren Klappe 10 über einen Zapfen mitnahmebeweglich an; gleiches gilt sinngemäß bezüglich des anderen oder übrigen Endes des hebelartigen Verstellglieds 29 und der mitnahmebeweglichen Koppelung mit der hier einen äußeren Klappe 12. Dabei sind die an den stromabwärtigen Klappenenden befindlichen Zapfen in äußerer Verlängerung mittels klappendrehpunkt-konzentrischer Schlitze 39,40,42 in der hier oberen Wand 22 durch letztere hindurchgeführt. Vorteilhaft bildet dabei ferner die außen an der hier z.B. oberen Wand 22 quer zur Düsenachse 20 verlaufende Führungsbahn 30' eine zusätzliche Wandversteifung aus. Der hier obere Verstellzylinder ist wiederum mit 31 bezeichnet; dessen zugehöriges zug-druckstangenartiges Verstellglied 33 ist dabei mit seinem freien Ende, in Höhe des Punktes A5, zumindest mittelbar über den betreffenden dortigen Mitnahmezapfen sowohl mit dem stromabwärtigen Ende der zentralen oder mittleren Klappe 10 als auch mit dem dortigen Ende des hebelartigen Verstellglieds 28' beweglich gekoppelt. Wie aus Fig. 8 hervorgeht, kann unten, außen, d.h. also an der betreffenden unteren Wand 23 die gleiche Verstellkinematik nebst Antrieb vorgesehen sein; dies gilt auch in Verbindung mit der als Innenansicht verkörperten anderen Schubdüsenhälfte aus Fig 8. Je Düsenhälfte sind mindestens zwei Verstellzylinder 31 bzw. 32 (Fig. 8) vorgesehen Gemäß Fig 8 sind bezüglich unterer Wand 23, außen, der zugehörige Verstellzylinder mit 32, ein zu 29 (oben) relevantes hebelartiges Verstellglied mit 29'' sowie dazu nächstliegende Rolle nebst Sektion der Führungsbahn mit 37' bzw. 30'' bezeichnet.

Gemäß Fig. 7 weisen die rohrartigen Zuläufe 18,19 als Strömungsteiler ausgebildete Leitwände 43,44 auf, die zugleich örtliche Rohrversteifungen ausbilden. Gemäß rechter Schubdüsenhälfte (Innenansicht von oben) sind also z.B. die Klappen 8,9 und 10 in der Ebene 13, in der sie schwenkbar gelagert sind, der Reihe nach der einen äußeren Seitenwand S0, der Leitwand 43 und der Zusammenführungsstelle S3 (aus S1 und S2) wandflächenbündig aerodynamisch verlustarm unmittelbar schwenkbar nachgeschaltet. Dies gilt selbstverständlich sinngemäß auch bezüglich der übrigen Klappen 11,12. In Gehäuselängsrichtung verlaufende Versteifungsstreben, z.B. 44', 45 können jeweils außen an der oberen und unteren Wand 22 bzw. 23 des Gehäuseabschnittes 21 bzw. der rohrartigen Zuläufe, z.B. 19, vorgesehen sein, wobei die eine Strebe 44' zugleich Halterungsmittel für den z.B. beweglich daran im Punkte B verankterten Stellzylinder 31 ist.

Insbesondere aus Fig. 8 erkennt man ferner, daß die kombinierten Antriebs-Verstell- und Führungssysteme von äußeren Gehäusen 46,47 umgebungsdicht eingefaßt sind. Derartige oder ähnliche Gehäuse oder Gehäuseumschalungen können sinngemäß auch bei der schon beschriebenen Schubdüsenvariante nach Fig. 5 vorgesehen sein.

Als weitere vorteilhafte Folge der schon beschriebenen Anordnung des Antriebs des Fluggerätes nach Fig. 1 und 3 ergibt sich aus Fig. 9 die Nutzungsmöglichkeit eines speziellen Raums 48, z.B. für Abwurflasten, zwischen den beiden Strahltriebwerken 3,4 und örtlich vor der Schubdüse 2. Im übrigen verdeutlicht Fig. 9 die Grund- oder Ausgangsdarstellung der Schubdüse 2 für den Geradeausflug. Soweit erforderlich, sind zu den Fig. 1,3,4 sowie 7 und 8 schon beschriebene und gezeichnete Details in Fig. 9 sowie aber auch in den Fig. 10,11 und 12 wiederum mit den gleichen Bezugszeichen belegt. In Fig. 9 verkörpert die Linie L den mittleren oder resultierenden Strahlablenkwinkel, hier=Null, aus der Summe und jeweiligen Abströmrichtung der zwischen den einzelnen Klappen 8,9 bzw. 9,10 bzw. 10,11 und 11,12 durchgesetzten Einzelschubstrahlen, die in der genannten Klappenreihenfolge durch die jeweils mittleren Stromlinien L1, L2, L3 und L4 verdeutlicht sind und die sich in dieser Schubdüsenendstellung (Geradeausflug) sämtlichst in einem Punkte SM auf der Linie L treffen. Die Stellung der mittleren bzw. zentralen Klappe 10 ist also repräsentativ für den mittleren bzw. resultierenden Strahlablenkwinkel. Die Linie L liegt dabei (Fig. 9 auf bzw. in der Verlängerung der Längssymmetrieebene 5 bzw. der Fluggerätlängsachse.

Gemäß Fig. 9 liegt also ein - vom Punkte SM aus gesehen - in Richtung auf das Düsenende fächerartig aufgeweitetet er Einzelstrahlverlauf nach den Linien L1 bis L4 vor. Die den letzteren zugeordneten relevanten Querschnittsflächen zwischen den Klappen 8,9 bzw. 9,10 bzw. 10,11 bzw. 11,12 sind der Reihe nach mit Q1, Q2, Q3 und Q4 bezeichnet. Gemäß Fig. 9 sind nach der Erfindung ferner - von der zentralen Klappe 10 bzw. von innen nach außen gesehen - die Düsenklappen 9,8 bzw. 11,12 in der betreffenden Ebene 13 jeweils mit zunehmender Winkelanstellung relativ zu einer Düsenachsparallelen bzw. zu einer jeweils zugehörigen parallelen Linie relativ zur Symmetrieebene 5 angeordnet, was in sinngemäßer Zuordnung durch die Neigungswinkel γ1=γ4 der Linien L1 bzw. L4 zur Linie L sowie durch die Neigungswinkel φ 2 = φ 3 der Linien L 2 bzw. L3 zur Linie L verdeutlicht ist.

Gemäß Fig 9 sind erfindungsgemäß die einzelnen Querschnittsflächen Q1, Q2, Q3 und Q4 so gewählt -d.h., Q3=Q2 und Q1=Q4-, daß ihr geometrischer Querschnitt den effektiv benötigten Gesamtstrahlquerschnitt der Schubdüse 2 entsprechend der geforderten Strahleinschnürung ergibt.

Mit anderen Worten muß also der genannte jeweilige geometrische Querschnitt um den Strahleinschnürungsfaktor größer eingestellt sein. Zum Einfluß der Strahleinschnürung addiert sich noch der Einfluß aus Umlenkverlusten.

Die Fig. 10,11 und 12 verkörpern der Reihe nach einen mittleren bzw. resultierenden Strahlablenkwinkel von 10° (Fig.10), 20° (Fig.11) und 25° (Fig.12). Wie dabei insbesondere aus Fig. 12 hervorgeht, wird der vom einen Strahltriebwerk 3 kommende Gasmassenstrom- bezüglich der rechten Schubdüsenhälfte in Flugrichtung gesehen - vom Übergangskanal bzw. Übergangsrohrteil 16 kommend- im rechteckigen rohrartigen Zulauf 18 und über die nachfolgenden Klappen 8, 9, 10 kaum mehr bzw. nur in einem verhältnismäßig geringen Umfang abgelenkt. Die damit in diesem Düsenbereich praktisch kaum noch bzw. nur in ganz extrem geringem Umfang auftretenden Umlenk-, und damit Druckverluste erfordern etwas kleinere, demgemäß angepaßte Querschnittsflächen Q1, Q2 in den Strömungskanälen zwischen den Klappen 8,9 bzw. 9,10. Auf der linken Düsenhälfte (in Zuordnung zum Zulauf 19) verstärken sich die Umlenkverluste, wodurch örtlich größere Querschnittsflächen Q3, Q4 zwischen den Klappen 10,11 bzw. 11, 12 erforderlich werden und erfindungsgemäß einstellbar sind.

Aus den Fig 10, 11 und 12 ist in dem erwähnten Zusammenhang also deutlich erkennbar, daß jeweils in Bezug auf den mittleren Strahlablenkwinkel (LinieL mit Klappe 10) die Strahlen gemäß Linien L1,L2 aus dem rechten Düsenteil mit Winkelübertreibung und aus dem linken Düsenteil gemäß Linien L3,L4 mit Winkeluntertreibung austreten. Im Wege der erfindungsgemäß hierauf abgestimmten Ausbildung und Anordnung der Führungsbahnen 30',30'' und entsprechender Verstellhebelkinematikausbildung und- anordnung (FIg.7 und 8) ist dies alles vorteilhaft praktizierbar.

Die Erfindung ermöglicht also, daß die zwischen den Klappen 8 bis 12 ausgebildeten engsten Düsenquerschnitte im Sinne eines konvergenten Düsenverlaufs immer am Schubdüsenaustritt liegen, unter Ausbildung der den jeweiligen Strahlablenkrichtungen gemäßen Linien L1,L2,L3,L4.

Es findet also bei der erfindungsgemäßen Schubdüse in allen Betriebsstellungen, als Folge einer Verringerung der Durchströmfläche vom Düseneintritt in Richtung auf den Düsenaustritt, immer eine Beschleunigung der Strömung statt, es entstehen somit keine nachteilhaften Rückwirkungen der Düsenströmung auf das oder die betreffenden Triebwerke 3,4, trotz eines zeitlich äußerst raschen Ansprechverhaltens der Schubdüse.

Die Ausbildung der Schubdüse nach Fig. 1,3,4,7,8 sowie Fig. 9 bis 12 bzw. im Sinne einer vergleichbaren oder ähnlichen "Doppeldüsenkonfiguration" gewährleistet auch bei Ausfall eines Triebwerkes, z.B. 3, eine volle Funktionsfähigkeit; d.h., die noch vorhandene Gasmassenströmung eines Strahltriebwerks, z.B. 4, kann über eine Düsenhälfte nebst Zulauf 19 im Sinne einer Einzeldüse beschleunigt werden, wobei dann der mittlere oder resultierende Abströmwinkel von der hierfür nunmehr verantwortliche "neuen" mittleren Klappe 11 bereitgestellt würde, deren Position dann nach wie vor über die vormalige zentrale oder mittlere Klappe 10 vom vom Antriebs- und Verstellsystem angesteuert würde.

Der Grundgedanke der Erfindung (Patentanspruch 1) wäre ferner auch dann realisierbar, wenn die Klappen bei einer schaufelgitterartigen Mehrfachklappenanordnung mit ungleichmäßigen gegenseitigen Abständen in der betreffenden Ebene 13 angeordnet wären.

Vorteilhaft -und nicht weiter dargestellt- können die z.B. aus Fig. 7 entnehmbaren hebelartigen Verstellglieder hinsichtlich vorstehend erwähnter "Winkelüber- oder untertreibungen" hinsichtlich ihrer Baulänge einstellbar bzw. verstellbar ausgeführt werden, um gemäß den betrieblichen Anforderungen auf der sicheren Seite liegen zu können. Eine verstellbare bzw. justierbare Hebellänge könnte auch bezüglich der Düsentrimmung in Abstimmung auf variable Triebwerke mit variablem Leistungs-Schubniveau sinnvoll sein. Im Hinblick z.B. auf letztere Gegebenheiten könnte auch der Einsatz variabler Klappenlängen von Vorteil sein bzw. der Einsatz von in Längsrichtung leicht oder unterschiedlich gekrümmten Klappen im Sinne stets vorhandener Düsenkonvergenz.

Z.B. über das ziehharmonikaartige Verstellhebelgestänge nach Fig. 7 (beidseitig außen hinten) sind sämtliche Düsenklappen erfindungsgemäß an beiden Enden schwenkbar gelagert, wodurch sich eine günstige Kraftaufteilung und -einleitung für das Antriebssystem ergibt. Die hebelartigen Verstellglieder schaffen mithin einen zusätzlichen "inneren" Kräfteausgleich zu Gunsten verringerter Antriebskräfte. Gewichtlich verhältnismäßig leicht herzustellende Verstellmittel, hier insbesondere die hebelartigen Verstellglieder, sind weitere vorteilhafte Maßnahmen zu Gunsten verringerter Antriebskräfte, und damit wiederum zu Gunsten raschest und genauestens möglicher Klappenverstellungen. Als Folge ihrer Lagerung werden die Klappen plattenförmig belastet, so daß sie verhältnismäßig schlank sowie gewichtlich vergleichsweise leicht, z.B. als Hohlkästen mit einer Wabenfüllung, erfindungsgemäß hergestellt werden können.

Neben den schon dargestellten und erläuterten Schubdüsenkonzepten als "Einfach -oder Grundkonzepten" nach Fig. 5 und 6 mit jeweils zwei Klappen wäre eine in den Zeichnungen nicht weiter erläuterte Schubdüsenkonfiguration gemäß der Erfindung vorstellbar, die aus zwei äußeren Klappen und einer zentralen oder mittleren Klappe besteht.

Die Erfindung ermöglicht ferner die Schaffung einer Schubdüse, die zur Verarbeitung und Steuerung der Gasmassenströme mehrerer Strahltriebwerke geeignet ist. Fig. 13 veranschaulicht hierzu beispielsweise eine Schubdüse 2' in der Zuordnung zu drei mit gleichmäßigen Abständen parallel nebeneinander angeordneten Strahltriebwerken in sinngemäßer Ausbildung nach Ziffern 3 und 4 (Fig.3). Dabei setzt sich ein Teil des Düsengehäuses aus drei mit den jeweiligen Gasmassenströmen kommunizierenden rohrartigen Zuläufen, nämlich zwei äußeren 18',19' und einem mittleren düsensymmetrisch darin integrierten Zulauf 48 zusammen. Die Zuläufe 18',19', 48 weisen einen rechteckigen Querschnitt auf, mit den Zuläufen vorgeschalteten bzw. an diese angeschlossenen Übergangsrohrteilen 16',17' (außen) bzw. 49 (innen), die -in Richtung der Strömung- von einem anfänglich kreisförmigen in einen rechteckförmigen Querschnitt übergehen. Gasabströmseitig mit den beiden äußeren Triebwerken kommunizierende Rohrkrümmer 14',15' sind austrittsseitig an die mit Rücksicht auf die äußeren Zuläufe 18',19' auslaufenden Übergangsrohrteile 16',17' angeschlossen. Das mittlere Übergangsrohrteil 49 kommuniziert mit einem kreiszylindrisch geradachsigen Rohrabschnitt 50, der gasabströmseitig an das mittlere Strahltriebwerk angeschlossen ist. Dabei fällt mit anderen Worten die Düsenachse 20' bzw. deren Verlängerung in symmetrisch geradachsiger Verlängerung über die Rohrteile 49,50 mit der Achse des mittleren Triebwerks zusammen. Seitenwandseitige Zusammenfürungsstellen des die Zuläufe 18',19', 48 enthaltenden Teils des Düsengehäuses sind mit S3',S3'' bezeichnet. Der Gehäuseabschnitt 21', der sich an den die Zuläufe 18',19',48 enthaltenden Teil des Düsengehäuses anschließt, enthält die in der Ebene 13' mit gleichmäßigen gegenseitigen Abständen schwenkbar angeordneten Klappen 8' ,9' ,10',11',12' unter zusätzlicher Einführung zweier weiterer Klappen 51,52. Die mittlere oder zentrale Klappe 10' repräsentiert wiederum den jeweils mittleren oder resultierenden Schubstrahlablenkwinkel, z.B=Null, in der hier angegebenen Geradeausflugstellung. Auch in Fig. 13 sollen die Klappen schwenklagerungsseitig den betreffend vorgeschalteten Seitenwandungen, Strömungsleitwänden und Zusammenführungsstellen aus den Zuläufen 18',19'48 aerodynamisch günstig bzw. möglichst verlustfrei flächenbündig kommunizierend nachgeschaltet sein. Antrieb und Verstellkinematik (hebelartige Stellglieder, Führungsbahnen, Verstellzylinder oder dergleichen können in z.B. gemäß Fig.7 und 8 aufgezeigter und beschriebener Weise vorgesehen sein. Demzufolge sind gleiche, vergleichbare oder ähnliche Elemente und Bauteile wie auch die Schubdüse nach Fig. 13 selbst mit 2' und folgende ... bezeichnet.

Ferner kann das erfindungsgemäße Schubdüsenkonzept zur dreidimensionalen Schubvektorsteuerung geeignet bzw. ausgebildet sein, indem in den mittels der Klappen in einer Ebene ablenkbaren Gesamtmassenstrom aus der Düse zusätzlich eine z.B. um eine obere Querachse verdrehbare Ablenkwand oder -blende 53 (Fig.1 und 2) eingeschwenkt bzw. gegenüber dem Gasmassenstrom nach oben weggeschwenkt werden könnte, wobei die zuletzt genannte Maßnahme eine Strahlablenkung im Wege des sogenannten "Coandaeffektes" bedeuten würde.

Wie aus Fig. 5 bis 6 ersichtlich, sind die Klappen 8,12 an ihren hinteren Enden abgerundet ausgebildet, und zwar für eine zumindest leichte Nachexpansion des durchgesetzten Gasmassenstromes. Es könnte beiden Düsenklappen 8,12 zu diesem Zweck aber auch eine endseitige innere Aufweitung im Sinne einer leichten Düsendivergenz aufgeprägt werden. Bei mehreren Klappen (z.B. Fig. 7 könnten die Einzelklappen hierzu am stromabwärtigen Ende sich beidseitig etwa parabel- oder keilförmig verjüngend ausgeführt sein.

## Patentansprüche

1. Schubdüse für mit Strahltriebwerken ausgerüstete Fluggeräte, insbesondere zur seitlichen Schubvektorsteuerung, bei der mindestens zwei über hebelartige Verstellglieder (28,29) betätigte Klappen (8;12) an ihren stromaufwärtigen Enden um quer zur Düsenachse verlaufende Drehachsen sowie zwischen im wesentlichen düsenachsparallel verlaufenden Wandungen (22,23) eines viereckigen Düsengehäuses gleichzeitig um unterschiedliche Verdrehwinkel derart verschwenkbar angeordnet sind, daß bei stets konvergentem Düsenkonturverlauf ein austrittsseitiger Engstquerschnitt zwischen den Klappen ausgebildet ist, dadurch gekennzeichnet, daß an stromabwärtige Klappenenden die einen Enden der hebelartigen Verstellglieder (28,29) angreifen, die in Höhe ihrer beweglich miteinander gekoppelten anderen Enden in einer Führungsbahn (30) verfahrbar angeordnet sind, die in Erzwingung gleichzeitig stets unterschiedlicher Klappenverdrehwinkel gekrümmt ausgebildet ist.

2. Schubdüse nach Anspruch 1, dadurch gekennzeichnet, daß die Klappen (8,12) an ihren stromaufwärtigen Enden in einer quer oder unter einem rechten Winkel zur Düsenachse (20) verlaufenden Ebene (13) an einander gegenüberliegenden Wandungen (22,23) eines Abschnitts (21) des Düsengehäuses schwenkbar gelagert sind, der an zwei, in Bezug auf die Klappenschwenkebene, gegenüberliegenden Seiten sowie hinten bzw. düsenaustrittsseitig im wesentlichen gänzlich offen ausgebildet ist.

3. Schubdüse nach Anspruch 2, dadurch gekennzeichnet, daß die hebelartigen Verstellglieder (28,29) in Höhe ihrer beweglich miteinander gekoppelten anderen Enden rollenartig in der kulissenartig ausgebildeten Führungsbahn (30) beweglich verfahrbar angeordnet sind, die im wesentlichen quer oder unter einem rechten Winkel zur Düsenachse (20) angeordnet ist, und worin die hebelartigen Verstellglieder (28,29) und die Führungsbeahnen (30) jeweils außen an der von der Heißgasströmung in der Düse abgewandten Seite, an mindestens einer der einander gegenüberliegenden Wandungen (22) angeordnet und dort von Gehäusen (46,47) umgebungsdicht eingefaßt sind.

4. Schubdüse nach einem der Ansprüche 1 bis 3, dadurch gekennzeichnet, daß die Antriebseinrichtungen hydraulisch oder pneumatisch betätigte Verstellzylinder (31) oder motorisch angetriebene Kugel-Roll-Spindeln sind, die mit zug-/druckstangenartigen Stellgliedern (33) an die klappenseitigen Hebelanlenkpunkte (A1 bzw. A2) oder an die führungsbahnseitig angeordneten Hebel- bzw. Hebelgelenkpunkte (A3) angreifen und die mit oder ohne Gehäuseeinfassung sowie außen an einer oder beiden Wandungen (22,23) angeordnet sind.

5. Schubdüse nach einem oder mehreren der Ansprüche 1 bis 4, dadurch gekennzeichnet, daß die einander gegenüberliegenden Wandungen (22,23) des Gehäuseabschnitts (21) koaxial zu den Klappendrehpunkten (P1,P2) oder -achsen verlaufende Führungsschlitze (40,39) aufweisen, durch welche an den stromabwärtigen Klappenenden befindliche zapfenartige Verlängerungen hindurchgeführt sind, mit denen die einen Enden der hebelartigen Verstellglieder (28,29) und gegebenenfalls das äußere Ende des Stellglieds (33) einer Antriebseinrichtung bzw. eines Verstellzylinders (31) gelenkig gekoppelt sind.

6. Schubdüse nach einem oder mehreren der Ansprüche 1 bis 5, dadurch gekennzeichnet, daß der die Klappen (8,12) zwischen den einander gegenüberliegenden Wandungen (22,23) einschließende Gehäuseabschnitt (21), von der Eintritts- nach der Düsen-Austrittsseite hin, in Bezug auf den Bereich, in dem die Klappen verschwenkt werden, in Anpassung an den mit dem jeweils maximalen äußeren Winkelausschlag einhergehenden Klappenneigungswinkel räumlich erweitert ist.

7. Schubdüse nach einem oder mehreren der Ansprüche 1 bis 6, dadurch gekennzeichnet, daß eine jeweilige Führungsbahn (30) beidseitig gleichförmig in Richtung auf einen gemeinsamen Düsensymmetriepunkt hin ausgewölbt gekrümmt ist, der mit der für die Ausgangsstellung im Geradeausflug der Klappen (8,12) maßgeblichen Position eines jeweils gemeinsamen Hebelanlenkpunktes (A3) nebst zugehöriger Rolle (37) zusammenfällt.

8. Schubdüse nach einem oder mehreren der Ansprüche 1 bis 7, dadurch gekennzeichnet, daß mehrere in einer gemeinsamen Düsenquerebene (13) in gleichmäßigen oder ungleichmäßigen Abständen schwenkbar angeordnet Klappen (8,9,10,11,12) ein axial durchströmtes Schaufelgitter ausbilden, bei dem die Klappen derartig über die Führungsbahnen (30',30'') und die mit diesen zusammenwirkenden hebelartigen Verstellglieder (28,29;28',29') gesteuert sind, daß ein für die Schubvektorsteuerung repräsentativer mittlerer Ablenkwinkel zur Düsen- bzw. Fluggeräte- und/oder verlängerten Triebwerksachse durch einen gasaustrittsseitig fächerartig aufgeteilten, in stromabwärtiger Richtung zusammenfließenden Einzelstrahlverlauf der jeweils zwischen zwei benachbarten Klappen durchgesetzten Gasmassenströme gewonnen wird, und worin die hebelartigen Verstellglieder (28,29;28'29') ziehharmonikaartig gelenkig aneinander gekoppelt sind.

9. Schubdüse nach Anspruch 8, dadurch gekennzeichnet, daß lediglich eine mittlere bzw. düsenzentral angeordnete Klappe (10) unmittelbar mit mindestens einer Antriebseinrichtung (31 bzw. 32) gekoppelt ist, wobei übrige Klappen (11,12) von den ziehharmonikaartig gelenkig gekoppelten und über die Führungsbahnen (30',30'') zwangsgesteuerten hebelartigen Verstellglieder (28,29 bzw. 28',29') verstellbar sind.

10. Schubdüse nach einem oder mehreren der Ansprüche 1 bis 8, dadurch gekennzeichnet, daß sie aus dem Gehäuseabschnitt (21), in dem die Klappen verschwenkbar angeordnet sind und aus mindestens einem etwa in Höhe der die Schwenklanklagerungen der Klappen enthaltenden Ebene (13) angeschlossenen, zumindest anschlußseitig viereckig ausgebildeten rohrartigen Zulauf (27) besteht und daß von einem viereckigen, im wesentlichen rahmenartigen Endabschnitt (R) des Zulaufs (27) aus die düsenachsparallel verlaufenden Wandungen (22,23) des Gehäuseabschnitts (21) frei auskragend angeordnet sind.

11. Schubdüse nach Anspruch 10, dadurch gekennzeichnet, daß der mindestens eine rohrartige Zulauf (18 bzw. 19) mindestens einen, vorzugsweise im Sinne einer zusätzlichen Versteifungswand ausgebildeten Strömungsteiler aufweist, wobei die Klappen (9 bzw. 11) sich an den Strömungsteiler und an den geraden Enden äußerer Wände (SO bzw. SO') eines Zulaufs (18 bzw. 19) aerodynamisch flächenbündig anschließen.

12. Schubdüse nach einem oder mehreren der Ansprüch 1 bis 11, dadurch gekennzeichnet, daß sie für den Durchsatz und die Schubvektorsteuerung der Gasmassenströme von von zwei oder mehreren mit Abstand im wesentlichen parallel nebeneinander, insbesondere in der Tragfläche und/oder im Rumpf eines Fluggerätes angeordneten Strahltriebwerken (3,4) ausgebildet ist mit entsprechend der Anzahl der Triebwerke vorgesehener Anzahl rohrartiger oder als Rohrkrümmer ausgebildeter Zuläufe (18,19), wobei eine mittlere oder zentrale Klappe (10,10') in der Längssymmetrieebene (5) des Fluggerätes sowie symmetrisch zur Düsenlängsachse (20) schwenkbar angeordnet ist.

13. Schubdüse nach einem oder mehreren der Ansprüche 1 bis 12, dadurch gekennzeichnet, daß die jeweils am weitesten außen liegenden Klappen in der Drehachsebene gegenüber angrenzenden Rohr- und/oder Leitwandenden sowie entlang der an die Wandungen (22,23) angrenzenden Klappenränder mittels starrer, elastischer und/oder beweglicher Dichtungen, z. B., Bürstendichtungen abgedichtet sind.

14. Schubdüse nach einem oder mehreren der Ansprüche 1 bis 13, dadurch gekennzeichnet, daß die hebelartigen Verstellglieder hinsichtlich ihrer Baulänge verstellbar ausgebildet sind.

15. Schubdüse nach einem oder mehreren der Ansprüche 1 bis 14, dadurch gekennzeichnet, daß insbesondere bei schaufelgitterartiger Anordnung mehrerer in gegenseitigen, vorzugsweise gleichförmigen Abständen in einer Querebene schwenkbar gelagerter Klappen (8,9,10,11,12), als Funktion örtlich unterschiedlicher Strahlablenkwinkel zwischen zwei jeweils benachbarten Klappen (8,9;9,11), örtlich unterschiedliche Engstquerschnitte zwischen diesen einstellbar sind.

## Claims

1. Thrust nozzle for aircraft fitted with jet engines, in particular for lateral thrust vector control, in which at least two flaps (8; 12) actuated by lever-like adjustment members (28, 29), are disposed at their upstream ends so as to pivot simultaneously about axes of rotation extending transversely to the nozzle axes and between walls (22, 23) of a rectangular nozzle casing which extend substantially parallel to the nozzle axis, about different angles of rotation in such a manner that with a constantly converging path of the nozzle contour the narrowest cross-section on the outlet side is formed between the flaps, characterised in that there engage on the downstream flap ends the first ends of the lever-like adjustment member (28, 29) which are arranged at their other ends, which are movably connected to one another, so as to be displaced in a guide path (30) which is forcibly curved to produce simultaneously constantly changing angles of rotation of the flaps.

2. Thrust nozzle according to Claim 1, characterised in that the flaps (8, 12) are pivotably mounted at their upstream ends in a plane (13) extending transversely to or at a right angle to the nozzle axis (20), on opposite walls (22, 23) of a section (21) of the nozzle casing, which section is substantially completely open on two opposite sides relative to the pivoting plane of the flaps, as well as at the rear or the nozzle outlet side.

3. Thrust nozzle according to Claim 2, characterised in that the lever-like adjustment members are disposed at their other ends, which are movably coupled to one another, so as to be movably displaceable in a roller-like manner in the slide-like guide path (30), which is disposed substantially transversely to or at a right angle to the nozzle axis (20), and whereby the lever-like adjustment members (28, 29) and the guide paths (30) are in each case disposed externally on the side remote from the hot gas flow into the nozzle, on at least one of the opposite walls (22), and are sealed there with respect to the environment by casings (46, 47).

4. Thrust nozzle according to any one of Claims 1 to 3, characterised in that the drive devices are hydraulically or pneumatically activated adjusting cylinders (31) or motor-driven spindles, which engage on the lever pivot points (A1 or A2) at the flap end or on the lever points or lever hinge points (A3) disposed at the path end by means of pull/push rod type adjustment members (33), and which are disposed with or without an enclosing casing externally on one or both walls (22, 23).

5. Thrust nozzle according to one or more of Claims 1 to 4, characterised in that the opposite walls (22, 23), of the casing section (21) comprise guide slots (40, 39) which extend coaxially to the points (P1, P2) or axes of rotation of the flaps and through which there are guided peg-like extensions which are located on the downstream flap ends, and to which the first ends of the lever-like adjustment members (28, 29) and optionally the external end of the setting member (33) of a drive device or an adjusting cylinder (31) are coupled in an articulated manner.

6. Thrust nozzle according to one or more of Claims 1 to 5, characterised in that the casing section (21) encasing the flaps (8, 12) between the two opposite walls (22, 23) is spatially widened from the inlet side to the nozzle outlet side, with respect to the area in which the flaps are pivoted and in accordance with the angle of tilt of the flap occurring at the maximum external angular deflection in each case.

7. Thrust nozzle according to one or more of Claims 1 to 6, characterised in that each guide path (30) is uniformly curved in an outwardly arched manner on either side in the direction of a common nozzle point of symmetry, which coincides with the position of a lever articulation point (A3) which is common in each case, which position is decisive for the initial setting of the flaps (8, 12) in straight and level flight and an associated roller (37).

8. Thrust nozzle according to one or more of Claims 1 to 7, characterised in that a plurality of flaps (8, 9, 10, 11, 12) which are disposed so as to pivot at equal or unequal distances in a transverse plane (13) of the nozzle form a cascade with axial throughflow, in which the flaps are controlled by the guide paths (30', 30'') and the lever-like adjustment members (28, 29; 28', 29') that cooperate therewith in such a manner that the average angle of deflection relative to the nozzle, flight device and/or extended engine axis, which angle is representative of the thrust vector control, is obtained by means of a single jet path of the gas mass flows which pass between two adjacent flaps in each case, which path is divided in a fan-like manner on the gas outlet side and converges in the downstream direction, and whereby the lever-like adjustment members (28, 29; 28', 29') are connected to one another in an articulated manner in the manner of a concertina.

9. Thrust nozzle according to Claim 8, characterised in that only one flap (10), which is central or disposed centrally relative to the nozzle, is coupled directly to at least one drive device (31 or 32), wherein the remaining flaps (11, 12) are adjustable by means of the lever-like adjustment members (28, 29 or 28', 29') which are coupled in an articulated and concertina-like manner and are forcibly steered via the guide paths (30', 30'').

10. Thrust nozzle according to one or more of Claims 1 to 8, characterised in that it consists of the casing section (21), in which the flaps are pivotably disposed, and of at least one pipe-like inlet (27) which is connected approximately at the level of the plane (13) containing the pivot bearings for the flaps and which is rectangular, at least on the connection side, and in that the walls (22, 23) of the casing section (21), which extend parallel with the nozzle axis, are arranged projecting freely from a rectangular, substantially frame-like end section (R) of the inlet (27).

11. Thrust nozzle according to Claim 10, characterised in that the pipe-like inlet (18 or 19), of which there is at least one, comprises at least one flow divider advantageously formed in the manner of an additional reinforcing wall, wherein the flaps (9 or 11) adjoin the flow divider and the straight ends of external walls (SO or SO') of an inlet (18 or 19) in an aerodynamically flush manner.

12. Thrust nozzle according to one or more of Claims 1 to 11, characterised in that it is formed for the throughflow and the thrust vector control of gas mass flows from two or more jet engines (3, 4) disposed adjacent to each other at a distance in a substantially parallel manner, in particular in the wing and/or the fuselage of an aircraft, wherein a middle or central flap (10, 10') is disposed so as to pivot in the longitudinal plane of symmetry (5) of the aircraft and symmetrically to the longitudinal nozzle axis (20).

13. Thrust nozzle according to one or more of Claims 1 to 12, characterised in that the flaps in the plane of the axis of rotation that are located outwards in each case are sealed with respect to adjacent pipe and/or pipe wall ends as well as along the flap edges adjacent the walls (22, 23) by means of rigid, resilient and/or movable seals, for example brush seals.

14. Thrust nozzle according to one or more of Claims 1 to 13, characterised in that the lever-like adjustment members are constructed so as to be adjustable with respect to their overall length.

15. Thrust nozzle according to one or more of Claims 1 to 14, characterised in that very narrow cross-sections which vary from one area to another can be set between two adjacent flaps (8, 9; 9, 11) in each case as a function of locally varying jet deflection angles between these flaps, in particular in the case of a cascade-type arrangement of a plurality of flaps (8, 9, 10, 11, 12) which are pivotably mounted at mutual, preferably uniform, spacings in a transverse plane with inlets (18, 19) which are pipe-like or formed as pipe bends, the number of which inlets corresponds to the number of engines.

## Revendications

1. Tuyère de poussée pour avions équipés de moteurs à réaction, en particulier pour commande latérale du vecteur de poussée, dans laquelle sont disposés au moins deux volets (8, 12) actionnés au moyen d'organes de réglage (28, 29) du type à levier sur leurs extrémités situées du côté amont du flux de façon à pouvoir pivoter autour d'axes de rotation s'étendent perpendiculairement à l'axe de la tuyère ainsi qu'entre des parois s'étendant de façon sensiblement parallèle à la tuyère (22, 23) d'un carter rectangulaire de tuyère en même temps avec des angles de rotation différents de telle façon qu'il se forme dans le cas d'un tracé du contour de la tuyère constamment convergent une section transversale très étroite du côté sortie entre les volets, tuyère de poussée caractérisée en ce qu'aux extrémités des volets situées en aval viennent en prise des extrémités des organes de réglage du type à levier (28, 29) qui sont disposées dans la hauteur de leurs autres extrémités couplées ensemble de façon mobile de façon à pouvoir suivre une piste de guidage (30) qui soit réalisée de façon recourbée en contraignant en même temps en permanence les volets à avoir des angles de rotation différents.

2. Tuyère de poussée selon la revendication 1, caractérisée en ce que les volets (8, 12) sont montés de façon à pouvoir pivoter à leurs extrémités situées du côté amont dans un plan (13) s'étendant transversalement à l'axe de la tuyère (20) ou sous un angle droit sur des parois (22, 23), situés en regard l'une de l'autre, d'une section (21) du carter de la tuyère, section qui est formée sur les deux côtés se faisant vis-à-vis par rapport au plan de pivotement des volets ainsi qu'en arrière ou du côté de la sortie de la tuyère de façon sensiblement complètement ouverte.

3. Tuyère de poussée selon la revendication 2, caractérisée en ce que les organes de réglage (28, 29) du type à levier sont disposés dans la hauteur de leurs autres extrémités couplées l'une avec l'autre de façon mobile de façon à pouvoir suivre à la manière de galets de façon mobile la piste de guidage (30) constituée comme une coulisse, piste qui est disposée sensiblement transversalement à l'axe de la tuyère (20) ou sous un angle droit et dans laquelle les organes de réglage du type à levier (28, 29) et les pistes de guidage (30) sont disposés respectivement à l'extérieur sur le côté situé à l'opposé du flux des gaz chauds dans la tuyère, sur au moins l'une des parois se faisant vis-à-vis (22) et sont entourés à cet endroit par des carters (46, 47) de façon étanche vis-à-vis l'environnement.

4. Tuyère de poussée selon l'une des revendications 1 à 3, caractérisée en ce que les dispositifs d'entraînement sont des vérins de réglage (31) actionnés hydrauliquement ou pneumatiquement ou des broches filetées à bille entraînées par propulseur qui viennent en prise par des organes de réglage (33) du type tirants ou bielles de compression aux points d'articulation (A1 ou A2) situées du côté des volets ou aux points d'articulation ou points d'appui de leviers (A3) disposés du côté des pistes de guidage et qui sont disposés avec ou sans enrobage de carter ainsi qu'extérieurement sur l'une ou les deux parois (22, 23).

5. Tuyère de poussée selon une ou plusieurs des revendications 1 à 4, caractérisée en ce que les parois se faisant vis-à-vis les unes aux autres (22, 23) de la section de carter (21) présentent des fentes de guidage (40, 39) s'étendant coaxialement aux centres de rotation (P1, P2) des volets ou aux axes de rotation des volets, fentes à travers lesquelles passent des prolongements du type tourillons se trouvant aux extrémités des volets situées en aval, tourillons avec lesquels des extrémités des organes de réglage du type à levier (28, 29) et le cas échéant l'extrémité extérieure de l'organe de réglage (33) d'un dispositif d'entraînement ou d'un vérin de réglage (31) sont couplés de façon articulée.

6. Tuyère de poussée selon une ou plusieurs des revendications 1 à 5, caractérisée en ce que la section de carter (21) enfermant les volets (8, 12) entre les parois se faisant vis-à-vis (22, 23), en partant du côté de l'entrée de la tuyère pour aller vers le côté sortie de la tuyère, est élargie par rapport à la zone dans laquelle on fait pivoter les volets en conformité l'angle d'inclinaison des volets compatible avec le débattement angulaire extérieur maximal.

7. Tuyère de poussée selon une ou plusieurs des revendications 1 à 6, caractérisée en ce qu'une piste de guidage (30) est recourbée avec la même forme des deux côtés dans le sens allant vers un point commun de symétrie de la tuyère qui coïncide avec la position valable pour la position de sortie des volets (8, 12) quand l'avion vole en ligne droite, d'un point d'articulation de levier commun (A3) conjointement avec le galet correspondant (37).

8. Tuyère de poussée selon une ou plusieurs des revendications 1 à 7, caractérisée en ce que plusieurs volets (8, 9, 10, 11, 12) disposés de façon à pouvoir pivoter dans un plan commun transversal à la tuyère (13) à intervalles réguliers ou irréguliers forment une grille d'aubes profilées traversées axialement par le flux dans laquelle les volets sont commandés par des pistes de guidage (30', 30'') et les organes de réglage (28, 29 ; 28', 29') du type à levier coopérant avec ces dernières, de telle sorte que l'on obtient un angle de déviation moyen représentatif pour la commande du vecteur de poussée pour axes de propulseurs prolongés d'avions à réaction ou d'avions par un trajet de réaction simple, réparti en éventail du côté de la sortie des gaz et s'écoulant de façon rassemblée dans le sens aval, des flux des masses gazeuses passant entre deux volets voisins et dans laquelle les organes de réglage du type à levier (28, 29 ; 28', 29') sont couplés les uns avec les autres de façon articulée à la manière d'un accordéon.

9. Tuyère de poussée selon la revendication 8, caractérisée en ce qu'uniquement un volet (10) disposé au milieu ou au centre de la tuyère est couplé directement avec au moins un dispositif d'entraînement (31 ou 32), d'autres volets (11, 12) pouvant être réglés par les organes de réglage (28, 29 ou 28', 29') du type à levier couplés de façon articulée à la manière d'un accordéon et obligatoirement commandés par les pistes de guidage (30', 30'').

10. Tuyère de poussée selon une ou plusieurs des revendications 1 à 8, caractérisée en ce qu'elle consiste en la section de carter (21), dans laquelle sont disposés les volets de manière à pouvoir pivoter et en au moins un ajutage (27) raccordé à peu près en hauteur au plan (13) contenant les emplacements des paliers de pivotement des volets, ajutage de type tubulaire de forme rectangulaire au moins du côté du raccordement, et en ce qu'elles sont disposées par une section terminale (R) de l'ajutage (27) rectangulaire, sensiblement en forme de cadre, librement en saillie à partir des parois (22, 23), s'étendant parallèlement à l'axe de la tuyère, de la section de carter (21).

11. Tuyère de poussée selon la revendication 10, caractérisée en en ce que l'admission (18 ou 19) en forme de tube présente au moins un diviseur d'écoulement formé, de préférence, dans le sens d'une paroi de raidissement additionnelle, les volets (9 ou 11) se raccordant au diviseur d'écoulement et aux extrémités rectilignes des parois extérieures (SO ou SO') d'une admission (18 ou 19) en affleurement aérodynamique.

12. Tuyère de poussée selon une ou plusieurs des revendications 1 à 11, caractérisée en ce qu'elle est constituée par le passage et la commande du vecteur de poussée des flux de masses gazeuses par deux ou plusieurs des moteurs à réaction (3, 4) disposés à distance les uns des autres de façon sensiblement parallèle, en particulier dans la surface portante et/ou dans le fuselage d'un avion avec le nombre prévu en fonction du nombre des propulseurs d'admissions (18, 19) constituées en forme de tubes ou de raccords coudés, un volet médian ou central (10, 10') étant disposé de façon à pouvoir pivoter dans le plan de symétrie longitudinal (5) de l'avion ainsi que symétriquement par rapport à l'axe longitudinal (20) de la tuyère.

13. Tuyère de poussée selon l'une ou plusieurs des revendications 1 à 12, caractérisée en ce que les volets se trouvant le plus à l'extérieur dans le plan de l'axe de rotation sont rendus étanches par rapport aux extrémités des parois des tubes et/ou des conduites adjacentes ainsi que le long des bords de volets adjacents aux parois (22, 23) au moyen de joints d'étanchéité rigides, élastiques et/ou mobiles, par exemple de joints d'étanchéité à brosses.

14. Tuyère de poussée selon une ou plusieurs des revendications 1 à 13, caractérisée en ce que les organes de réglage du type à levier sont constitués de façon à être réglables en ce qui concerne leur longueur hors tout.

15. Tuyère de poussée selon l'une ou plusieurs des revendications 1 à 14, caractérisée en ce que l'on peut installer en particulier dans le cas d'une disposition du type à grille d'aubes profilées de plusieurs volets (8, 9, 10, 11, 12) montés à des distances mutuelles, de préférence uniforme de façon à pouvoir pivoter dans un plan transversal, des sections transversales très étroites différentes à poste fixe entre les volets (8, 9 ; 9, 11) comme fonction localement d'angles différents de déviation des jets des réacteurs entre deux volets voisins (8, 9 ; 9, 11).
